# EUROPEAN PATENT APPLICATION

(11) **EP 4 694 328 A1**
(43) Date of publication of application: **11.02.2026**
(21) Application number: 24193753.1
(22) Date of filing: 09.08.2024
(51) Int. Cl.: H04W 36/00

(54) **USER EQUIPMENT AND BASE STATION INVOLVED IN EVENT TRIGGERED MEASUREMENT REPORTING**

(71) Applicant: Panasonic Intellectual Property Corporation of America, Torrance, CA 90504 (US)
(72) Inventor: DHANANJAYA, Harshith, 63225 Langen (DE); SUZUKI, Hidetoshi, Osaka, 571-8501 (JP); KUANG, Quan, 63225 Langen (DE)
(74) Representative: Grünecker Patent- und Rechtsanwälte PartG mbB

(57) **Abstract**

The present disclosure relates to a user equipment, UE, comprising the following. A transceiver of the UE, in operation, receives from a base station, a configuration for event triggered measurement reporting. A processing circuitry of the UE, in operation, obtains, from the event triggered measurement reporting configuration, a first condition for triggering early synchronization measurement reporting, which is performed in preparation of an early synchronization with a target candidate beam, and a second condition, which differs from the first condition, for triggering cell switch measurement reporting which is performed in preparation of a cell switch with a target candidate cell, and (is configured to) performs, for one or more beams, an evaluation as to whether measurements on the one or more beams fulfil at least one of the first condition and of the second condition. Further, there are provided a base station and methods performed by the UE or the base station.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand broad bandwidth, while they are different in that the URLLC service may preferably require ultra-low latencies.

A second objective is to achieve forward compatibility, which facilitates a completely new system design and/or the introduction of novel features.

### Summary

One non-limiting and exemplary embodiment facilitates providing procedures for a UE to perform improved event triggered measurement reporting procedures.

In an embodiment, the techniques disclosed here feature a user equipment, UE, comprising the following. A transceiver of the UE, in operation, receives from a base station, a configuration for event triggered measurement reporting. A processing circuitry of the UE, in operation, obtains, from the event triggered measurement reporting configuration, a first condition for triggering early synchronization measurement reporting, which is performed in preparation of an early synchronization with a target candidate beam, and a second condition, which differs from the first condition, for triggering cell switch measurement reporting which is performed in preparation of a cell switch with a target candidate cell, and (is configured to) performs, for one or more beams, an evaluation as to whether measurements on the one or more beams fulfil at least one of the first condition and of the second condition.

In another embodiment, the techniques disclosed here feature a base station, comprising the following. A processing circuitry of the base station, in operation, generates a configuration for event triggered measurement reporting, wherein the event triggered measurement reporting configuration indicates a first condition for triggering early synchronization measurement reporting, which is performed by a UE in preparation of an early synchronization with a target candidate beam, and a second condition, which differs from the first condition, for triggering cell switch measurement reporting, which is performed by the UE in preparation of a cell switch with a target candidate cell. A transceiver of the base station, in operation, transmits the generated event triggered measurement reporting configuration to the UE.

It should be noted that general or specific embodiments may be implemented as a system, a method, an integrated circuit, a computer program, a storage medium, or any selective combination thereof.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### Brief description of the Figures

In the following exemplary embodiments are described in more detail with reference to the attached figures and drawings.
- **Fig. 1**: shows an exemplary architecture for a 3GPP NR system to which the exemplary embodiments of the present disclosure may be applied;
- **Fig. 2**: illustrates a split-gNB architecture, where a gNB is split into a gNB-central unit and one or more gNB-distributed units,
- **Fig. 3**: is a signaling diagram for illustrating a LTM cell switch procedure involving a UE, a source gNB and a target gNB,
- **Fig. 4**: illustrates an exemplary event triggered measurement reporting procedure,
- **Fig. 5A and 5B**: illustrate a first example of an improved event triggered measurement reporting procedure according to a first solution and a possible drawback,
- **Figs. 6A and 6B**: illustrate a second example for measurement reporting in an improved event triggered measurement reporting procedure according to the first solution,
- **Fig. 7**: illustrates an exemplary and simplified structure of a UE and a base station,
- **Fig. 8**: illustrates a functional structure of the circuitries pertaining to the UE,
- **Fig. 9**: illustrates a functional structure of the circuitries pertaining to the base station,
- **Fig. 10**: illustrates an exemplary and simplified flow diagram for the UE behavior according to an exemplary implementation of the present disclosure,
- **Fig. 11**: illustrates an exemplary and simplified flow diagram for the base station behavior according to an exemplary implementation of the present disclosure,
- **Fig. 12**: is a signaling diagram for illustrating an example of an improved event triggered measurement reporting procedure according to the second solution involving a UE, a source gNB and a target gNB,
- **Fig. 13**: is a signaling diagram for illustrating another example of an improved event triggered measurement reporting procedure according to the second solution involving a UE, a source gNB and a target gNB,
- **Fig. 14**: illustrates an example for measurement reporting in an improved event triggered measurement reporting procedure according to the second solution,
- **Fig. 15**: illustrates another example for measurement reporting in an improved event triggered measurement reporting procedure according to the second solution,
- **Fig. 16**: illustrates another example for measurement reporting in an improved event triggered measurement reporting procedure according to the second solution,
- **Fig. 17**: illustrates another example for measurement reporting in an improved event triggered measurement reporting procedure according to the second solution,
- **Fig. 18**: is a signaling diagram for illustrating another example of an improved event triggered measurement reporting procedure according to the second solution involving a UE, a source gNB and a target gNB,
- **Fig. 19**: is a signaling diagram for illustrating another example of an improved event triggered measurement reporting procedure according to the second solution involving a UE, a source gNB and a target gNB,

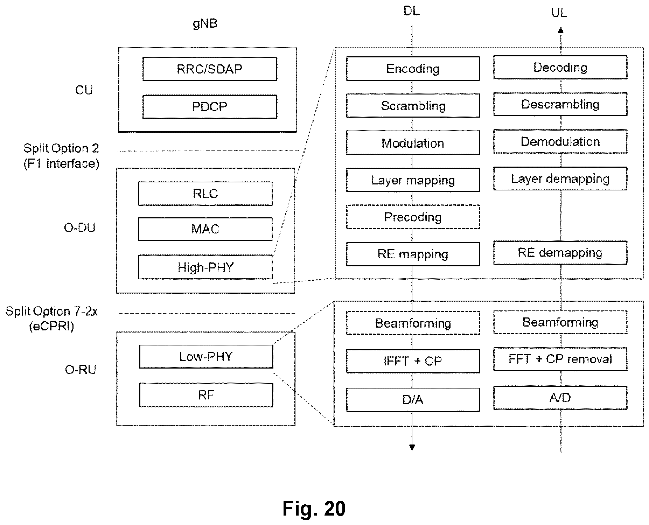

- **Fig. 20**: shows exemplary functional split options in 5G open-radio access network (O-RAN).

### DETAILED DESCRIPTION

### 5G NR system architecture and protocol stacks

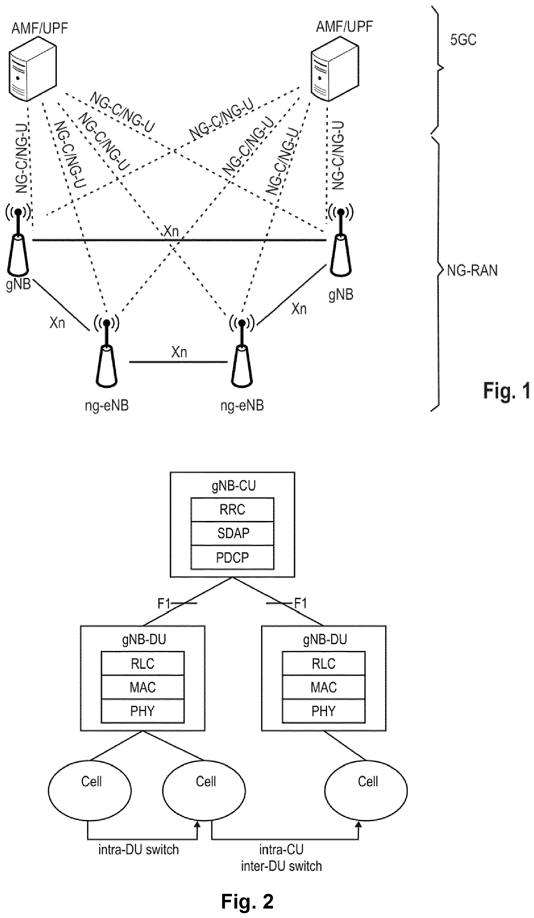

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

### Split gNB architecture

In the 3GPP standard, a gNB can be split into a gNB-CU (Central Unit) and one or more gNB-DUs (Distributed Units). This is illustrated in **Fig. 2****.**

The gNB-CU is a logical node that provides support for the higher layers of the protocol stack such as SOAP, PDCP and RRC. On the other hand, the gNB-DU is a logical node that provides support for the lower layers of the protocol stack such as RLC, MAC and Physical layer. Also, note that SDAP layer will not be present if the CU is connected to a 4G Core network as the 5G core network would be available to support SOAP. Therefore, the PHY and MAC layers are terminated at the gNB-DU, while Layer 3 (RRC) is terminated at the gNB-CU.

In one example, there is a single CU for each gNB, i.e. one gNB-DU is connected to only one gNB-CU; alternatively, for resiliency, a gNB-DU may be connected to multiple gNB-CUs. One gNB-CU may control multiple gNB-DUs; for example more than 100 gNB-DUs can be connected to one gNB-CU. Each gNB-DU is able to support one or more cells, so one gNB can control hundreds of cells unlike the 4G BTS. One cell is supported by only one gNB-DU.

Also, note that the interface between CU and DU is named F1, and as per 3GPP, it should be an open interface. For NG-RAN, the NG and Xn-C interfaces for a gNB consisting of a gNB-CU and gNB-DUs, terminate in the gNB-CU. For EN-DC, the S1-U and X2-C interfaces for a gNB consisting of a gNB-CU and gNB-DUs, terminate in the gNB-CU. The gNB-CU and connected gNB-DUs are only visible to other gNBs and the 5GC as a gNB.

The gNB-CU/DU architecture is specified in more detail e.g. in 3GPP TS 38.401 v18.1.0, e.g. section 6.1. The F1 interface is specified in more detail e.g. in 3GPP TS 38.473 v18.1.0.

### Random Access procedure

When the UE moves from the coverage area of one cell to another cell, at some point a serving cell change needs to be performed. According to one possibility, serving cell change is triggered by L3 measurements and is done by RRC signalling triggered Reconfiguration according to a RACH (Random Access Channel) procedure (or simply random access procedure). The RACH procedure can also be used in other contexts within NR, for example:
- For handover, when synchronization is to be established to a new cell;
- To reestablish uplink synchronization to the current cell, if synchronization has been lost due to a too long period without any uplink transmission from the device;
- To request uplink scheduling, if no dedicated scheduling request resource has been configured for the device.

There are numerous events that may trigger the UE to perform a random access procedure (see 3GPP TS 38.300, section 9.2.6), including the following. The random access procedure is triggered by a number of events:
- Initial access from RRC_IDLE; the UE uses the CBRA (Contention-based Random Access) procedure based on the SS/PBCH blocks.
- RRC Connection Re-establishment procedure; the UE uses the CBRA procedure based on the SS/PBCH blocks.
- Handover; this uses the contention based or CFRA (Contention-free Random Access) procedures, and it can be based on SS/PBCH blocks or CSI-RS.
- DL or UL data arrival during RRC_CONNECTED when UL synchronisation status is "nonsynchronised";
   ∘ In case of UL data arrival with non-synchronized UL, the UE uses the CBRA procedure based on the SS/PBCH blocks.
   ∘ In case of DL data arrival with non-synchronized UL, the network uses a PDCCH order with contention based or CFRA procedure based on the SS/PBCH blocks.
- UL data arrival during RRC_CONNECTED when there are no PUCCH resources for SR available; the UE uses the CBRA procedure based on the SS/PBCH blocks.
- SR failure; the UE sends a scheduling request in response to UL data arrival but fails to receive an UL grant from the network. The UE uses the CBRA procedure based on the SS/PBCH blocks.
- Transition from RRC_INACTIVE to RRC_CONNECTED state; the UE uses the CBRA procedure based on the SS/PBCH blocks.
- To establish time alignment for a secondary TAG; the network uses a PDCCH order with CBRA procedure based on the SS/PBCH blocks.
- Request for Other SI (see clause 7.3); if the SI is contained in Msg1, the UE uses a dedicated preamble based on association with SS/PBCH block. If the SI is contained in Msg3, the UE uses the CBRA procedure based on the SS/PBCH blocks.
- Beam failure recovery; the UE uses the contention based or CFRA procedure based on SS/PBCH blocks or CSI-RS association.

A mobile terminal can be scheduled for uplink transmission if its uplink transmission is time synchronized. Therefore, the Random Access Channel (RACH) procedure plays a role as an interface between non-synchronized mobile terminals (UEs) and the orthogonal transmission of the uplink radio access. For instance, the Random Access is used to achieve uplink time synchronization for a user equipment, which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access Procedure in order to achieve uplink timesynchronization in the target cell.

The PRACH consists of a preamble format made up of one or more preamble sequences transmitted in a time-frequency resource. The UE transmits the PRACH preamble in a PRACH occasion (RO) which is a time-frequency resource that the network allocates for preamble transmission.

There can be at least two types of random access procedures, contention based random access (CBRA) procedure, and contention free random access (CFRA) procedure. In the CBRA procedure, multiple users randomly select a preamble from a pool of preambles, and a contention resolution phase determines which user, if any, had its data successfully received by the network. Contention resolution resolves contention between two or more users selecting the same preamble. In the CFRA procedure, a preamble is uniquely pre-allocated to the user, hence there is no possibility of preamble collision between users and no need for contention resolution. An exemplary definition of a random access procedure can be found in 3GPP TS 38.321, v18.1.0 section 5.1.

### Layer-1-Layer-2-triggered mobility (LTM)

According to one possibility the RACH serving cell change is triggered by L3 measurements and is done by RRC signalling triggered Reconfiguration with Synchronisation for change of PCell and PSCell, as well as release or add SCells when applicable. Such a procedure may involve complete L2 (and L1) resets, leading to longer latency, larger overhead and longer interruption time than beam switch mobility.

With the aim of reducing the mobility latency or interruption time for handover procedures, Layer-1-Layer-2-(also termed lower-layer) triggered mobility (LTM) was introduced in NR 3GPP Rel. 18 onwards. To facilitate a sequential cell switch, the cell switch shall be prepared in a manner that no RRC reconfiguration is needed for the UE after the cell switch, regardless of which candidate cell as a target candidate cell becomes the new serving cell.

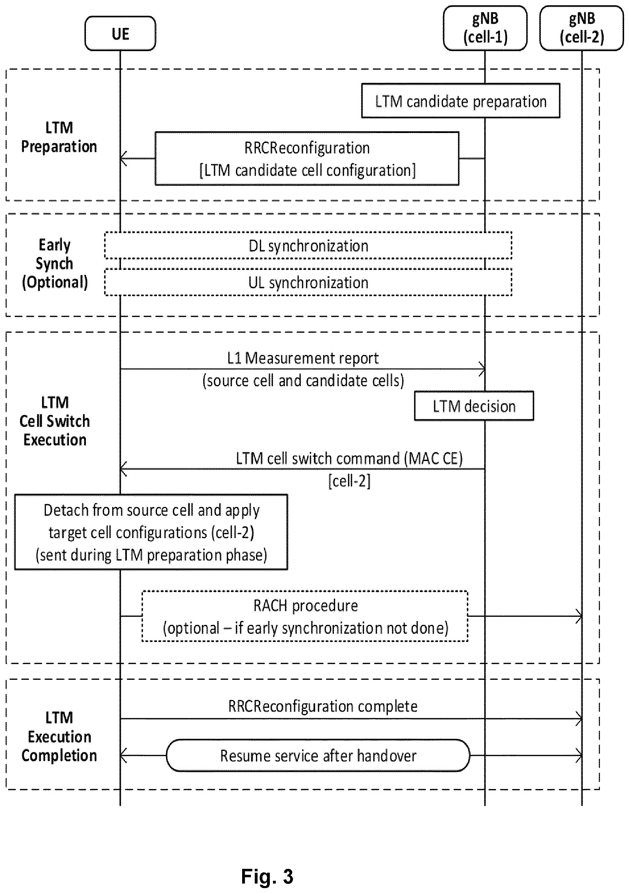

As illustrated in Fig. 3, an LTM cell switch procedure defines four LTM operation stages, namely LTM preparation, early synchronization execution, LTM cell switch execution and LTM execution completion. In the LTM preparation stage, the UE is configured by the RRC (L3) with a set of (LTM) candidate cells by the UE's serving cell (here termed as gNB (cell-1)). In the (optional) early synchronization execution stage, the UE may perform an early synchronization with a candidate cell or with one or more candidate beam(s) of at least one candidate cell. The early synchronization execution can be triggered by the UE's serving cell even before a cell switch (or handover) decision is administered towards one target cell, in order to facilitate fast cell switch (handover) operation by reducing synchronization overhead during handover. The early synchronization execution, may comprise, for example, that the UE acquires the synchronization signals (e.g., Primary Synchronization Signal, PSS, and Secondary Synchronization Signal, SSS) typically used to obtain the frame timing of the target beam or the target cell, thereby achieving time and frequency downlink synchronization. Furthermore, the early synchronization execution, may comprise, for example, that the UE obtains one or more timing advance (TA) value(s) of respective candidate beam(s) or respective target candidate cell(s) (for the early synchronization procedure). As an example, the TA value could be obtained by the UE from the source gNB, which has received it from the (one or more) candidate cell(s), for which early synchronization was executed. The TA value can be used to facilitate uplink timing synchronization between the UE and the target beam or target cell.

In the LTM cell switch execution stage, the serving cells receives from the UE measurement reports on beams (associated with detected and measured reference signals) of both the serving cell and the configured candidate cells. Based on the measurement results included in the measurement reports, the serving cell decides whether to execute an LTM cell switch to a target candidate cell or not. Then, L1- or L2 signalling (e.g. a MAC CE (and/or possibly a DCI)) is used to trigger the execution of the cell switch from the UE's serving cell to a target candidate cell (here to gNB (cell-2)) without RRC reconfiguration. As apparent therefrom, the cell switch is decided based on lower-layer (e.g. Layer 1 RSRP) measurements performed at the UE and reported to the gNB-DU to benefit mobility decisions performed by gNB (lower layer gNB or gNB-DU). In more detail, the UE is configured with L1 measurement configurations including a list of reference signals (or measurement channels) to generate L1 measurements and reports the measurement results to the serving gNB-DU (e.g. gNB (cell-1)). The reference signals can include reference signals from one or more candidate cells (neighbour cells) of the serving gNB-DU. Further, the UE is also configured with L1 reporting configurations with radio resources or reporting channels (like PUCCH, PUSCH, MAC CE, etc) to report the L1 measurement results to the network (e.g. via gNB (cell-1)).

After completing the LTM cell switch execution in the LTM execution completion phase by transmitting a completion confirmation to the new serving cell (here to gNB (cell-2)), which is serving the UE after the cell switch execution, a subsequent LTM cell switch execution can be performed by using the same RRC configuration sent during the LTM preparation phase. Such a subsequent LTM cell switch execution is referred to as "subsequent LTM".

While in NR 3GPP Rel. 18, the LTM operation is limited to intra gNB application, i.e. to LTM operation between gNB-DUs connected to a single gNB-CU, in NR 3GPP Rel. 19 inter gNB application, i.e. LTM operation between gNB-DUs connected to different gNB-CUs, is introduced with the aim of facilitating greater usability of LTM operations in mobility applications.

The benefit achieved by performing the measurement and reporting by Layer 1 is the low latency.

### Measurement reporting

Reference signals, like SSB or CSI reference signals, are transmitted by the source cell (or serving cell) and one or more neighboring cells, which may serve as candidate cells, to enable the UE to generate cell level or beam level measurement results for evaluation at UE and to report channel conditions to network to be evaluated at the network for other features like cell switch decisions (network triggered cell switch r decisions). As an example, the measurement reporting of measurement results by the UE to the source cell, can be performed based on different reporting types and on different reporting procedures (or levels) indicated in the reporting configuration. For example, the IE ReportConfigNR (see e.g. e.g. in 3GPP TS 38.331 v18.01) specifies criteria for triggering of an NR measurement reporting event. The reporting type can be one of the following listed below:
- Periodic reporting

Measurements results of all the detected cells/ beams or detected reference signals associated with the cells or beams are regularly generated and reported to the network with a certain periodicity obtained at the UE by using configured periodicity information.
- Semi-persistent reporting.

The network, in particular the serving cell, triggers the start point for measurement reporting to begin for one or more configured cells/ beams/ reference signals, by sending a reporting request (or reporting trigger) to the UE. After reception of the UE reporting request) the UE generates and transmits measurement reports with a certain periodicity obtained at the UE by using configured periodicity information.
- Aperiodic reporting.

The network, in particular the serving cell, requests for measurement reports as and when required by sending a reporting request to the UE, and UE responds with a single measurement report for the requested cells/ beams/ reference signals to each reporting request.
- Event triggered reporting.

Measurement quality based events, which can be defined on a cell level or on a beam level, are configured at UE. The events define the trigger interval for activating (and deactivating) measurement reporting. Event triggered reporting will be discussed in more detail below.

Separate measurement reporting procedures (or levels) are defined as in 5G-NR is listed below.
- Layer-3 measurement reporting.

The measurement results are generated at layer-1, but are reported by the UE at the RRC layer using RRC message(s). The Layer-1 measurements are structured by RRC layer at UE and are transmitted as Measurement Report message in UL. Layer-3 measurement reporting is typically used for Layer-3 handover procedures (RACH based cell switch). The may use L3 measurement reporting during the LTM candidate preparation (see Fig. 3), e.g. for determining the LTM candidate cells to be configured at the UE.
- Layer-1 measurement reporting.

The measurement results are generated at layer-1 and are transmitted by the UE s directly over PHY layer messages like PUCCH or PUSCH in UL. The network uses L1 measurement reporting during the LTM cell switch procedure to enable faster reporting from the UE to the network and to benefit the lower layer of the serving gNB (or more precisely of the serving gNB-DU) to perform a cell switch decision to enable faster handover by reducing interruptions, which could originate from higher layer interpretations and/or higher layer decoding, during handover Layer-3 based handover procedures (RACH based cell switch).

### Event triggered measurement reporting

Event triggered measurement reporting configurations are defined with specific event trigger conditions for reporting measurement results. The event trigger conditions are called entering condition (also "trigger condition") and leaving condition (also "cancel condition") and are defined for specific events, in order to allow for the UE to perform measurement reports to the network, only when specific events are approaching or are taking place, with the aim of avoiding measurement reporting overload.

The entering condition for an event is configured for measurement result ranges, for which the network considers measurement reporting useful to perform handover/cell switch execution decisions. The leaving condition of an event is configured for measurement result ranges, for which the network not consider the measurement reporting useful anymore after it was already triggered before and expects to eliminate cells from the event triggered criteria (which were already reported during entering condition). Optionally, the network may configure UE to report this 'event criteria eliminated' situation (i.e. leaving condition fulfilled) for cell or beam related measurements, by configuring a so called "reportOnLeave" parameter.

3GPP specification 38.331, v. 18.01, chapter 5.5.4 specified the following (RAT) events and event conditions defined for 5G NR.
- Event A1 for determining that serving cell becomes better than threshold:
   ∘ Entering condition: Ms - Hys > Thresh
   ∘ Leaving condition: Ms + Hys < Thresh
- Event A2 for determining that serving cell becomes worse than threshold:
   ∘ Entering condition: Ms + Hys < Thresh
   ∘ Leaving condition: Ms - Hys > Thresh
- Event A3 for determining that neighbor cell becomes offset better than SpCell (e.g. primary serving cell of either the Master Cell Group (MCG) or the Secondary Cell Group (SCG)):
   ∘ Entering condition: Mn + Ofn + Ocn - Hys > Mp + Ofp + Ocp + Off
   ∘ Leaving condition: Mn + Ofn + Ocn + Hys < Mp + Ofp + Ocp + Off
- Event A4 for determining that neighbor cell becomes better than threshold:
   ∘ Entering condition: Mn + Ofn + Ocn - Hys > Thresh
   ∘ Leaving condition: Mn + Ofn + Ocn + Hys < Thresh
- Event A5 for determining that SpCell becomes worse than threshold1 and neighbor becomes better than threshold2:
   ∘ Entering condition: Mp + Hys < Thresh1 and Mn+ Ofn +Ocn - Hys > Thresh2
   ∘ Leaving condition: Mp - Hys > Thresh1 and Mn+ Ofn +Ocn + Hys < Thresh2
- Event A6 for determining that neighbour becomes offset better than SCell:
   ∘ Entering condition: Mn + Ocn - Hys > Ms + Ocs + Off
   ∘ Leaving condition: Mn + Ocn + Hys < Ms + Ocs + Off

Parameter definitions of the event condition formulation are as follows:
∘ Hys is the hysteresis parameter for the event.
∘ Ms is the measurement result of the serving cell not taking into account any offsets.
∘ Mn is the measurement result of the neighbouring cell, not taking into account any offsets.
∘ Mp is the measurement result of the SpCell (or serving cell), not taking into account any offsets.
∘ Ofn is the measurement object specific offset of the reference signal of the neighbour cell.
∘ Ocn is the cell specific offset of the neighbour cell and set to zero if not configured for the neighbour cell.
∘ Ofp is the measurement object specific offset of the SpCell (or serving cell).
∘ Ocp is the cell specific offset of the SpCell (or serving cell) and is set to zero if not configured for the SpCell.
∘ Off is the offset parameter for the event.
∘ Thresh, Thresh 1, Threhs2 are the threshold parameter for the specific events i.e. a1-Threshold, a2-Threshold etc.

The computation units of each parameter are as follows:
∘ Ms, Mn, Mp are expressed in dBm in case of RSRP, or in dB in case of RSRQ and RS-SINR.
∘ Ofn, Ocn, Ofp, Ocp, Hys, Off are expressed in dB
∘ Thresh, Thresh 1, Threhs2 are expressed in the same units as Ms, Mn, Mp, respectively.

Other events defined for Inter RAT measurement reporting are event B1 (Inter RAT neighbour becomes better than threshold) and event B2 (PCell becomes worse than threshold1 and inter RAT neighbor becomes better than threshold2).

The entering and leaving conditions criteria are controlled by the network using the parameters defined for the specific event, which is identified in the event triggered measurement reporting configuration, to act upon the event trigger condition formulation computed and monitored by the UE.

Depending on the event and the configured UE keeps on measuring serving cells and/or neighbors report quantity/quality and validates it with the threshold or offset defined in measurement report configuration. The report quantity/quality for the event can be any of RSRP, RSRQ or SINR.

When the entering condition for a configured event are met, the UE transmits at least one initial measurement report including results of the measurements to the network (serving gNB). In addition, the event based measurement reporting configuration may include periodicity information like a `Report Amount' parameter, which specifies the number of times UE must repeat measurement reporting and a `Report Interval' parameter, which specifies the rate at which UE repeats measurement reports sent to the network (serving gNB), to indicate to the UE to repeat measurement reporting after entering condition is triggered. The range configurable by the `Report Amount' parameter varies from '1' for indicating to transmit a single report to 'infinity' for indicating that measurements results are reported until the serving cell is changed due to cell switch (or until the leaving condition is met).

The event reporting configurations may also comprise a TimeToTrigger parameter, which indicates to the UE a certain duration (or a certain number of times) the UE is required to measure (and validate that the measurement results fulfil the entering condition) before reporting its first measurement result upon entering condition. This helps in avoiding providing measurement results when the measurement results "ping pong" between fulfilling and not fulfilling the entering condition (and the leaving condition).

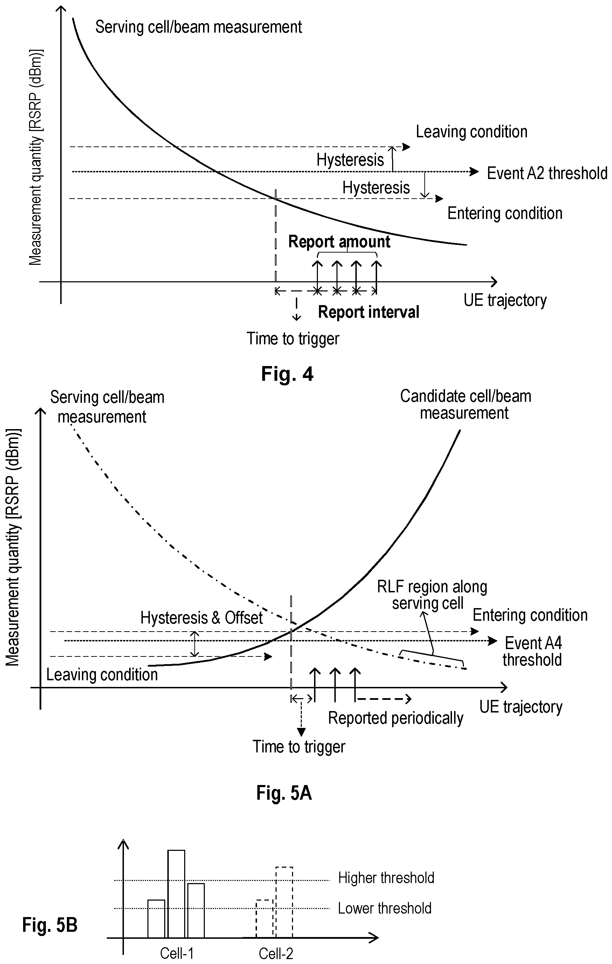

**Fig. 4** illustrates an exemplary event triggered measurement reporting procedure for the event A2. In this example, the UE evaluates an RSRP of the serving cell. When the RSRP of the serving cell fulfils the entering condition (i.e. becomes worse than a threshold, e.g. when the UE is moving away from the serving gNB), the UE triggers the measurement reporting. This means that after the requirements configured by the Time to trigger parameter, the UE starts to transmit measurement reports according to the periodicity information (i.e. the configured Report Amount' and `Report Interval' parameters. If after triggering the measurement reporting, the RSRP of the serving cell becomes better again (i.e. becomes better than a threshold, e.g. when the UE is moving towards the serving gNB again) and the leaving condition is fulfilled, the UE deactivates the measurement reporting. Fig. 4 also illustrates the hysteresis between the entering condition and the leaving condition (configured by the Hys parameter), which is introduced in order to avoid "ping pong" between activating and deactivating the measurement reporting procedure, when the UE moves near the cell edge.

The benefits achieved by measurement reporting with event trigger conditions is to facilitate the utilization of less radio resources at the serving cell as compared to the other reporting types (or levels). Especially, event triggered measurement reporting allows the UE not to report measurement results until event trigger conditions are satisfied. This means for example that a threshold value configured for an event trigger conditions could be placed by the network such that the measurement reporting is triggered only when the handover situation is approaching. Furthermore, the periodicity information can be provided by the network to the UE for indicating to repeat the measurement results triggered for entering condition. This facilitates improving the handover performance, because measurement reports are made regularly available to the network (only) when necessary for handover decisions.

### Further improvements

In NR Release 18, LTM related measurement reporting only supports periodic, semi-persistant, or aperiodic reporting types. In particular low layer (L1) measurement reporting in NR Release 18 only supports periodic, semi-persistent, or aperiodic reporting types, which are applied accordingly to the LTM cell switch, while higher layer (L3) measurement reporting in NR Release 18, supports periodic and event triggered measurement reporting.

In NR Release 18 LTM, the network may already configure up to 8 candidate cells for measurement reporting. This value may be increased beyond 8 in the NR Release 19 LTM procedure, to benefit inter-CU LTM (i.e. LTM between gNB-DUs connected to different gNB-CUs). Considering the large number of cells or cells per beam, which the UE may have report during L1 measurement reporting for LTM, integrating an event triggered measurement reporting procedure in L1 measurement reporting could be useful especially for LTM to facilitate reducing the bandwidth of required reporting resources and enabling an efficient handover performance.

Accordingly, 3GPP Release 19 enhancement activities for LTM focus on investigating components to support event triggered (low layer) measurement reporting type, with the intention to enhance the overall reporting performance and radio resource utilization efficiency. Especially, it is discussed to introduce LTM event triggered L1 measurement procedure should be designed for LTM related decisions such as selecting (by the serving cell) the candidate cells and/or candidate beams for an early synchronization execution (performed by the UE), and selecting (by the serving cell) the candidate cells and/or candidate beams for a LTM cell switch execution (performed by the UE).

In this respect, it is discussed to use beam level evaluation of cells as a baseline for event conditions defined for LTM related decisions. In this context, it is discussed to define LTMx events (adopted from the Ax events mentioned above) for beam specific quality evaluations of serving cell and/or candidate cells as the L1 LTM measurement events. For example, LTM2 (Beam of serving cell becomes worse than absolute threshold), LTM3 (Beam of candidate cell becomes amount of offset better than beam of serving cell), LTM4 (Beam of candidate cell becomes better than absolute threshold) and LTM5 (Beam of serving cell becomes worse than absolute threshold1 AND Beam of candidate cell becomes better than another absolute threshold2) are considered as exemplary candidate events for mobility use cases in LTM. But also other events for mobility use cases in LTM may be defined in the future, without being based on the existing Ax events or other existing event definitions. Further, cell level measurements for event evaluation and/ or reporting as well as defining entering and leaving condition for the event triggered reporting behavior are under discussion.

In this context, the inventors have identified problems, which may occur when adopting the legacy Ax events for defining the conditions for triggering (and optionally deactivating) the LTMx events. In particular, so far, event triggered measurement reporting procedure as per legacy NR, defines event trigger conditions such as entering condition and leaving condition to comply only with cell switching (or handover) related decisions, but do not consider early synchronization condition, which usually needs to be triggered before the cell switch is evaluated and accordingly could be triggered too late for allowing for a RACH-less cell switch. Accordingly, it is unclear how early synchronization decision and cell switch decision could be managed by the network by using event trigger measurement reporting procedures for facilitating reducing the measurement reporting overhead.

### First solution

In the following a first example of an improved event triggered measurement reporting procedure and a second example of an improved event triggered measurement reporting procedure according to a first solution will be presented so as to overcome one or more of the above identified disadvantages of the prior art.

In the first example of the improved event triggered measurement reporting procedure, the LTMx events could be configured for both early synchronization and cell switch decisions, by adjusting the entering condition defined for the LTMx events to satisfy at least the early synchronization criteria, i.e. to adjust the requirements defined by the entering condition in order to trigger the measurement reporting already, when the channel qualities are in a range where early synchronization is possible, but where the channel qualities still would not be favorable for deciding on a cell switch. The UE could then still continue to periodically perform measurement reports until also the cell switch criteria is satisfied.

For example, as illustrated in **Fig. 5A****,** the event LTM4 threshold value (or entering condition) can shifted to a lower measurement quantity (i.e. is reached earlier in time when the UE moves towards the target candidate cell), to earlier satisfy early synchronization criteria, which allows for a timely early synchronization. In addition, later in time (i.e. when the UE moves further towards the target candidate cell), the UE could repeat measurement reporting for cell switch criteria periodically. Here, the network (serving cell) may perform early synchronization and cell switch execution based on any of the repeated measurement reports.

However, the inventors have also identified drawbacks in connection with this first improved event triggered measurement reporting procedure. In particular, since the threshold value is shifted lower (or earlier in time) to satisfy the early synchronization criteria, a larger number of cells/ beams may be triggered for reporting. This is schematically illustrated in **Fig. 5B****,** where when applying the lower threshold (shifted to satisfy the early synchronization criteria) five beams would fulfil the entering condition, so that the measurement results of five beams would be reported, while when applying the higher threshold (satisfying the cell switch criteria) only the two beams fulfil the entering condition, so that the measurement results of two beams would be reported. The higher increased amount of measurement reporting may be acceptable during reporting for early synchronization criteria in order to allow the network the early synchronization execution, but since the same trigger condition is used during cell switch criteria, the larger number of cells/ beams reported may not be necessary anymore in order to determine the cell switch execution. Further, since more cells (or beams per cell) are triggered for reporting, this may occupy nearly the same amount of radio resources as a regular periodic reporting configuration. Hence, in the first improved event triggered measurement reporting procedure the radio resource utilization may be compromised and not flexible enough to be optimized further.

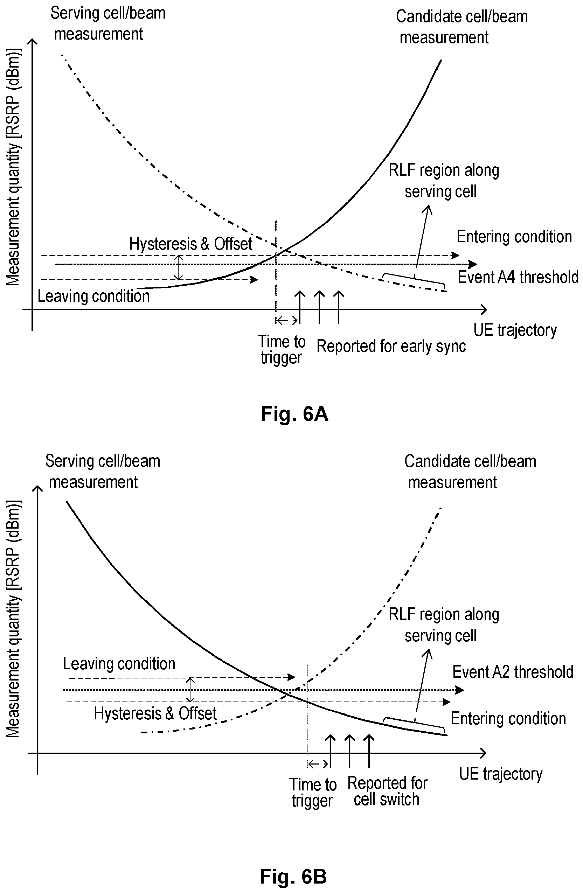

In the second example of the improved event triggered measurement reporting procedure, a combination of LTMx events could be configured at the UE, wherein one (or more) event could be used for triggering (and eventually deactivating) early synchronization measurement reporting while the remaining one (or more) event used for triggering cell switch reporting (and eventually deactivating). For example, the event LTM4 may be used for triggering early synchronization measurement reporting (see e.g. **Fig. 6A**), and the event LTM2 may be used for triggering cell switch measurement reporting (see e.g. **Fig. 6B**). Here, the threshold value (or entering condition) of the LTM4 event is configured to satisfy the early synchronization criteria of each candidate cell (see dashed line in Fig. 6A). The threshold value (or entering condition) of the LTM2 event is configured according to the cell switch requirements, i.e. to be triggered when the serving cell signal measurement approaches degradation (RLF) with the UE (see dashed line in Fig. 6B). In the second example of the improved event triggered measurement reporting procedure, any one LTMx event can also be configured with two reporting configuration IDs (i.e. twice, respectively once for the early synchronization criteria and once for the cell switch criteria) as a combination, to achieve the same approach.

However, the inventors have also identified drawbacks in connection with this second improved event triggered measurement reporting procedure. In particular, the LTMx events configured in combination create a common region where early synchronization condition and cell switch condition are both triggered (one for each LTMx combination). This may result in duplicated measurement reports (or unnecessary reports), which are sent to the network corresponding to LTMx event configured for early synchronization triggering, when the cell switch criteria is already met. Especially when one LTMx event type (for example LTM4) is configured with two reporting configuration IDs, where one reporting configuration is configured to meet early sync condition and the other one reporting configuration is configured to meet the cell switch condition. As a result, more radio resources than required may be occupied during the common event triggering region. Furthermore, the second improved event triggered measurement reporting procedure, mandates multiple LTMx events to be configured at UE, which may unnecessary increase the configuration size of LTM configuration structure. In addition, determining and evaluating multiple event trigger conditions may increase the event evaluation effort/ complexity at the UE, and not all types of UEs may support such complexity.

In the following, further solutions of event triggered measurement reporting procedure and parts thereof are presented that facilitate avoiding one or more of the above described disadvantages.

### Second solution

In the following an improved event triggered measurement reporting procedure according to a Second Solution will be presented so as to overcome one or more of the above identified disadvantages of the prior art.

In the following, UEs, base stations (e.g. distributed unit and central unit thereof), integrated circuits and respective procedures to meet these needs will be described for the new radio access technology envisioned for the 5G mobile communication systems, but which may also be used in previous LTE-based mobile communication systems or future (e.g. 6G) mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "**base station**" or "**radio base station**" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system.

The base station can be implemented exemplarily in a split architecture (see Fig. 2), according to which a gNB can be split into a gNB-CU (Central Unit) providing support for the higher layers (e.g. RRC) and one or more gNB-DUs (Distributed Units) providing support for the lower layers (e.g. MAC, PHY).

Communication between the UE and the base station is typically standardized and may be defined by different layers, such as PHY, MAC, RRC etc. (see above background discussion).

The term "**obtain**" in connection with obtaining from an event triggered measurement reporting configuration a first condition and a second condition can be broadly understood as "**deriving**" or "**determining**" the first and second condition by using the event related parameters defined in the event triggered measurement reporting configuration. In one example, the "**configuration**" is a configuration with one reporting configuration ID and is defined for a single (LTM) event, which means the configuration information received by the UE for configuring the event triggered measurement reporting configuration identifies a single (LTM) event. In other words in the one example, the UE "**obtains**" the first condition for triggering measurement reporting related to the early synchronization operation and the second condition for triggering measurement reporting related to the cell switch operation from a single configuration, which identifies (and is defined for) one LTMx event (e.g. one of LTM2, LTM3, LTM4 and LTM5).

The terms "**trigger (entering, or activate)**" and "**deactivate**" in connection with the measurement reporting procedure is to be broadly understood as a concept of controlling whether a measurement reporting is performed or not. Other possible terms could be used, such as "**start**" and "**stop**" respectively, or "**enable**" and "**disable**" respectively.

The term "**early synchronization measurement reporting**" in connection with the measurement reporting procedure should mean that one or more measurement report(s) are performed by the UE in order to enable the network (serving cell) to decide on, whether the UE should perform an execution of early synchronization with one of the beams (or the beam), which are (is) identified by the one or more measurement report(s). The term "**cell switch measurement reporting**" in connection with the measurement reporting procedure should mean that one or more measurement report(s) are performed by the UE in order to enable the network (serving cell) to decide on, whether the UE should perform an execution of cell switch with one of the beams (or the beam), which are (is) identified by the one or more measurement report(s).

The term "**measurement results fulfil a condition**" can be understand in the context of event triggered measurement reporting, e.g. in the sense that the UE "**evaluates**" or "**validates**" that an measurement evaluated value for a beam or cell, which is obtained (or "determined") by performing and evaluating measurements on a reference signal associated with the beam or cell, "**fulfils**" or "**satisfies**" the condition, i.e. is larger or lower than e.g. a threshold or an offset defined by the respective event for which the condition "evaluated". For example, if the condition requires the measurement evaluated value for the beam or cell to be larger than a threshold, then the measurement results fulfil the condition, when the UE determines that the measurement evaluated value is larger than the threshold, and do not fulfil (or satisfy) the condition, when the UE determines that the measurement evaluated value is smaller than the threshold. Similar, if the condition requires the measurement evaluated value for the beam or cell to be smaller than a threshold, the measurement results fulfil the condition, when the UE determines that the measurement evaluated value is smaller than the threshold, and do not fulfil (or satisfy) the condition, when the UE determines that the measurement evaluated value is larger than the threshold.

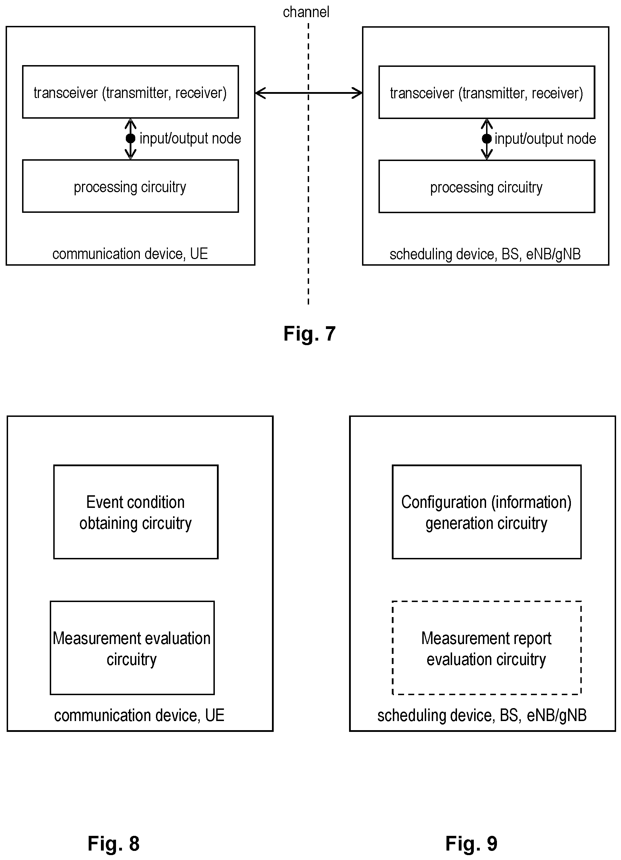

**Fig. 7** illustrates a general, simplified and exemplary block diagram of a UE (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of improved event triggered measurement reporting procedures will be described in the following, which facilitate for a UE to perform improved early synchronization execution procedures and improved cell switch execution procedures. In said connection, improved UEs, improved base stations and improved integrated circuits are presented, which participate separately or together in the improved event triggered measurement reporting procedures. Corresponding methods for the UE behavior and the base station behavior are provided as well. The integrated circuits may correspond to the UE and base station, and respectively their behavior.

The present solutions of the improved event triggered measurement reporting procedures can be based on some or a combination of the different mechanisms described above in context of the exemplary 3GPP 5G-NR implementations, including e.g. the use of event configurations (e.g. for obtaining measurement reporting conditions) or details on the implementation scenarios (see LTM) as currently discussed in 3GPP. Especially, the second solution is based on the idea of facilitating the configuration of one LTMx event (defined e.g. in analogy to the Ax events described above), which is configured for facilitating (event triggered) L1 measurement reporting in LTM. In particular, the second solution aims in supporting the UE in obtaining one or more early synchronization trigger condition(s), one or more cell switch trigger condition(s) and optionally early synchronization and cell switch leaving conditions from a single measurement reporting configuration, to assist the network to perform LTM related decisions like early synchronization execution and cell switch execution.

**Fig. 8** illustrates a simplified and exemplary UE structure according to an exemplary implementation of the improved event triggered measurement reporting procedure, which can be implemented based on the general UE structure explained in connection with Fig. 7. The various structural elements of the UE illustrated in said Fig. 8 can be interconnected between one another e.g., with corresponding input/output nodes (not shown) e.g., in order to exchange control and user data and other signals. Although not shown for illustration purposes, the UE may include further structural elements.

As apparent from Fig. 8, the processing circuitry of the UE may include event condition obtaining circuitry and Measurement evaluation circuitry.

In the present case as will become apparent from the below disclosure, the processing circuitry of the UE can thus be exemplarily configured to at least partly perform one or more of obtaining, from an event triggered measurement reporting configuration, a first condition for triggering early synchronization measurement reporting and a second condition for triggering cell switch measurement reporting, performing, for one or more beams, an evaluation as to whether measurements on the one or more beams fulfil at least one of the first condition and of the second condition, etc.

In the present case as will become apparent from the below disclosure, the transceiver of the UE can thus be exemplarily configured to at least partly perform one or more receiving a configuration for event triggered measurement reporting, transmitting one or more measurement report(s), etc.

One exemplary procedure as will be disclosed in more detail further below is implemented by a UE that includes the following. A transceiver of the UE, in operation, (is configured to) receives from a base station, a configuration for event triggered measurement reporting. A processing circuitry of the UE, in operation, (is configured to) obtains, from the event triggered measurement reporting configuration, a first condition for triggering early synchronization measurement reporting, which is performed in preparation of an early synchronization with a target candidate beam, and a second condition, which differs from the first condition, for triggering cell switch measurement reporting which is performed in preparation of a cell switch with a target candidate cell, and (is configured to) performs, for one or more beams, an evaluation as to whether measurements on the one or more beams fulfil at least one of the first condition and of the second condition.

The processing circuitry of the UE may implement more functionality than the above-mentioned obtaining of the first condition and of the second condition, as it may, for instance, further perform measurements on the one or more beams and prepare measurement reports, in response to determining that measurement reporting is activated for at least one of the one or more beams.

A corresponding exemplary method comprises the following steps performed by a UE:
receiving (from a base station), a configuration for event triggered measurement reporting;
obtaining from the event triggered measurement reporting configuration, a first condition for triggering early synchronization measurement reporting, which is performed in preparation of an early synchronization with a target candidate beam, and a second condition, which differs from the first condition, for triggering cell switch measurement reporting which is performed in preparation of a cell switch with a target candidate cell, and
performing, for one or more beams, an evaluation as to whether measurements on the one or more beams fulfil at least one of the first condition and of the second condition.

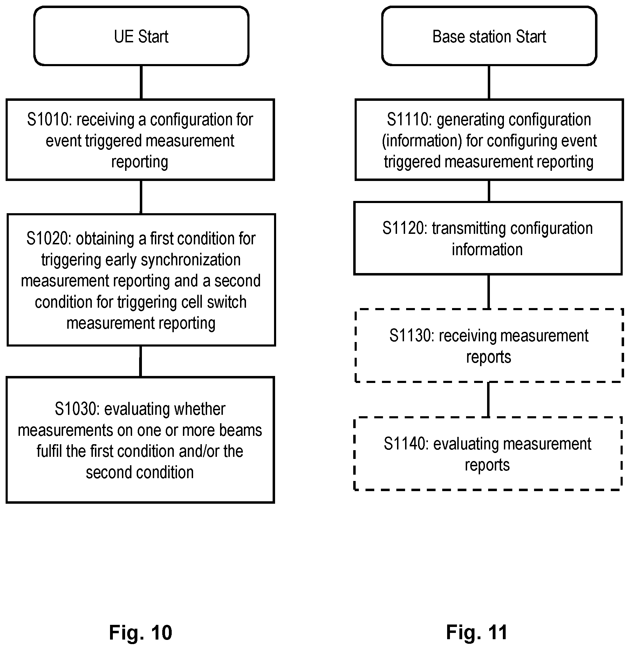

A corresponding sequence diagram for an exemplary UE behavior in line with the above-discussed UE and UE method is in **Fig. 10****.**

The above-described event triggered measurement reporting procedure thus facilitate achieving the objective and overcoming some of the drawbacks explained above. According to the Second solution, for instance, it is facilitated to configure single LTMx events to support lower layer (L1) measurement reporting for both LTM related procedures, namely early synchronization execution and cell switch execution, while at the same time facilitating to reduce or avoid measurement reporting overload. In particular, since a separate entering condition formulation ("first condition) is obtainable at the UE for triggering measurement reporting in connection with the early synchronization procedure of LTM, the entering condition formulation for triggering the measurement reporting in connection with the cell switch execution procedure of LTM is not altered. This allows to that only the measurement reporting for early synchronization may be triggered for a larger number of cells/ beams, while the measurement reporting for cell switch execution can be expected to be triggered for a smaller number of cells/beams. Ideally, those cells/ beams, for which the cell switch measurement reporting is triggered are a subset of the those reported during early synchronization measurement reporting.

Some exemplary implementations of the improved event triggered measurement reporting procedure also involve improved base stations. Correspondingly, the improved event triggered measurement reporting procedure also provides improved base stations that participate therein, as will be explained in the following.

**Fig. 9** illustrates a simplified and exemplary base station structure according to an exemplary implementation of the improved event triggered measurement reporting procedure, which can be implemented based on the general base station structure explained in connection with Fig. 7. The various structural elements of the base station illustrated in said Fig. 9 can be interconnected between one another e.g., with corresponding input/output nodes (not shown) e.g., in order to exchange control and user data and other signals. Although not shown for illustration purposes, the base station may include further structural elements.

As apparent from Fig. 9, the processing circuitry of the base station may include a configuration (information) generation circuitry, and optionally may include a measurement report evaluation circuitry.

In the present case as will become apparent from the below disclosure, the processing circuitry of the base station can thus be exemplarily configured to at least partly perform one or more of generating, a configuration for event triggered measurement reporting, wherein the event triggered measurement reporting configuration indicates a first condition for triggering early synchronization measurement reporting and a second condition for triggering cell switch measurement reporting, evaluate eventually measurement results included in (eventually, i.e. depending on the channel conditions) received measurement reports, etc.

In the present case as will become apparent from the below disclosure, the transceiver of the base station can thus be exemplarily configured to at least partly perform one or more of transmitting the generated event triggered measurement reporting configuration, etc.

The processing circuitry of the base station may implement more functionality than the above-mentioned generating of event triggered measurement reporting configuration (information), as it may, for instance, further evaluate whether to instruct the UE to execute early synchronization (and decide the candidate beam or cell, for which early synchronization is to be executed at the UE), evaluate whether to instruct the UE to execute a cell switch (and decide the target candidate beam or cell), and control the transceiver to transmit or receive control signaling and/or to receive or transmit data.

One exemplary procedure as will be disclosed in more detail further below is implemented by a base station that includes the following. A processing circuitry of the base station, in operation, (is configured to) generates a configuration for event triggered measurement reporting, wherein the event triggered measurement reporting configuration indicates a first condition for triggering early synchronization measurement reporting, which is performed by a UE in preparation of an early synchronization with a target candidate beam, and a second condition, which differs from the first condition, for triggering cell switch measurement reporting, which is performed by the UE in preparation of a cell switch with a target candidate cell. A transceiver of the base station, in operation, (is configured to) transmits the generated event triggered measurement reporting configuration to the UE.

A corresponding method comprises the following steps performed by the base station:
generating a configuration for event triggered measurement reporting, wherein the event triggered measurement reporting configuration indicates a first condition for triggering early synchronization measurement reporting, which is performed by a UE in preparation of an early synchronization with a target candidate beam, and a second condition, which differs from the first condition, for triggering cell switch measurement reporting, which is performed by the UE in preparation of a cell switch with a target candidate cell; and
transmitting the generated event triggered measurement reporting configuration to the UE.

A corresponding sequence diagram for an exemplary base station behavior in line with the above-discussed base station and corresponding method is illustrated in **Fig. 11****.** The sequence diagram illustrates an exemplary and simplified implementation of the above presented base station method. As illustrated, the method may further comprise an optional step (S1130) of receiving one or more measurement reports according to the generated configuration and an optional step (S1140) of evaluating the received measurement reports, in order to decide on an early synchronization execution and/or a cell switch execution at the UE.

The different processes at the UE side and the base station have been explained with respect to above Figs. 7-11. More detailed and exemplary implementations of these processes of the improved measurement recording procedure according to the Second Solution will be explained in the following.

### <Entering conditions for early synchronization and for cell switch>

According to a first exemplary implementation of the Second Solution, the processing circuitry of the UE, in operation, performs measurements on the one or more beams, and evaluates the measurements, wherein the processing circuitry, in operation, triggers early synchronization measurement reporting for those of the one or more beams, whose measurement results fulfil the first condition and do not fulfil the second condition, and, in operation, triggers the cell switch measurement reporting for those of the one or more beams, whose measurement results fulfil the second condition.

As outlined above, exemplary the first condition and the second condition obtained from the an LTMx events may be defined for measurement of the radio quality/quantity measurement type, and the UE may determine the "measurement evaluated value" by measuring serving cells and/or neighbours report radio quantity/quality measurement parameters, like RSRP, RSRQ, SINR etc.. The determined "measurement evaluated value" (in the following illustrated examples the RSRP) is evaluated by the processing circuitry of the UE with respect to the first condition and the second condition obtained from the event triggered measurement reporting configuration.

If the processing circuitry of the UE determines that the "measurement evaluated value" of a certain beam fulfils the first condition, which serves as an entering condition for early synchronization measurement reporting, and does not fulfil the second condition, which serves as an entering condition for cell switch measurement reporting, the processing circuitry starts to prepare one or more measurement report(s) for this beam to report to the network that this beam fulfils the early synchronization criteria (as configured in the event triggered measurement reporting configuration). If the processing circuitry of the UE determines that the "measurement evaluated value" of a certain beam fulfils the second condition, which serves as the entering condition for cell switch measurement reporting, the processing circuitry starts to prepare one or more measurement report(s) for this beam to report to the network that this beam fulfils the cell switch criteria (as configured in the event triggered measurement reporting configuration).

While, in the presented solutions, report radio quantity/quality measurement parameters (especially RSRP) are used for configuring/obtaining the event triggered measurement reporting conditions, it should be kept in mind that alternatively or in addition the LTMx events may be defined for distance based measurement related parameters or for time based measurement related parameters.

For example, the first condition and the second condition obtained from LTMx events be defined for distance based measurements such as that the distance between the UE and a referenceLocation1 is above threshold1 and distance between UE and reference Location 2 is below threshold2 can be used for determining the starting point of measurement reporting at the UE. In such an implementation, the measurement evaluated value may refer to distance measurement information derived from parameters such as radio signal strength (e.g. RSRP, RSRQ, SINR etc.), signal traversal time (e.g. time of arrival, ToA, or time of departure, ToD, etc.) or signal traversal phase (e.g. angle of arrival, AoA, or angle of departure, AoD, etc.) Details for such an events are omitted here.

In another example, the first condition and the second condition obtained from LTMx events be defined for time based measurements such as that the time measured at the UE is within a duration from threshold can be used for determining the starting point of measurement reporting at UE. In such an implementation, the measurement evaluated value may refer to time/clock maintained at UE with reference to the epoch defined by UTC time or GNSS time ,etc. Details for such an events are omitted here.

Among the above provided different measurement types, at least the radio quality/quantity measurements parameter can be derived by lower-layer (e.g. Layer 1) measurements.

### <Preparation of measurement reports>

According to a second exemplary implementation of the Second Solution, the processing circuitry of the UE, in operation, prepares one or more measurement reports including results of the measurement for those beams among the one or more beams, for which the early synchronization measurement reporting is triggered and/or for which the cell-switch measurement reporting is triggered, and the transceiver, in operation, transmits the one or more measurement reports to the base station.

A further improvement of the improved event triggered measurement reporting procedure according to the Second solution provides an improved measurement reporting. As presented above for some exemplary implementations, the gNB may rely on the results of measurements performed at the UE side, e.g. to determine the beams/cells for the early synchronization and to determine the target candidate beam/cell for a cell switch performed at the UE.

The present improvement of the event triggered measurement reporting procedure implements a lower-layer measurement reporting, such that the lower layer of the gNB has direct access to the measurement results from the UE without delay. The lower layer of the gNB could be e.g. the PHY or MAC layer.

The measurements as such can, but need not be limited to layer-1 measurements. Rather, the UE may perform one or more of layer-1 measurements (such as the radio quality/quantity measurements described above) and layer-3 measurements (such as the radio quality/quantity measurements, the distance-based measurements or the time-based measurements described above).

The results of the measurements are then transmitted by the UE to the gNB at a lower layer and thus using lower-layer messages, e.g. an UL MAC CE or an UL PUCCH / PUSCH message. Such lower-layer messages are quicker compared to the layer-3 measurement reporting.

The UE can continuously perform different measurements on the one or more beams. Depending on the configured LTMx, the one or more beams can include at least one serving beam (e.g. for the events LTM2, LTM3 and LTM5), which is used for signal transmission and/or signal reception in the serving cell (e.g. serving gNB-DU), which is serving the UE, and at least one candidate beam (e.g. the events LTM3, LTM4 and LTM5), which is used for signal transmission and/or a signal reception after the cell switch from the serving cell to the target candidate cell. Hereby, the target candidate cell is one out of one or more candidates for participating in mobility (e.g. LTM) for the UE.

The one or more beams, for which measurements are evaluated by the UE may be identified in the event triggered measurement reporting configuration. As another possibility, the beams are configured and identified in a "measurement configuration", which is generally configured for the UE for all types of measurement reporting, and in the event triggered measurement reporting configuration just the index of the measurement configuration is provided to identify the one or more beams. In both exemplary implementations, the processing circuitry, in operation, determines the one or more beams from the event triggered measurement reporting configuration, and, performs the improved event triggered measurement reporting for the identified one or more beams.

### <Time to Trigger>

According to a third exemplary implementation of the Second Solution, the processing circuitry, in operation, determines a first delay value for delaying the transmission of a measurement report in response to determining that measurements on the one or more beams fulfil the first condition and do not fulfil the second condition, and determines a second delay value for delaying the transmission of a measurement report in response to determining that measurements on the one or more beams fulfil the second condition.

In the third exemplary implementation of the Second Solution the event triggered measurement reporting configuration may comprise at least one TimeToTrigger parameter, which allows the processing circuitry of the UE to obtain the first delay value and/or the second delay value (depending the first delay value and the second delay value are both configured or if only one of the two values is configured). Hereby, the processing circuitry of the UE may obtain the first delay value and the second delay value from a common TimeToTrigger parameter included in the event triggered measurement reporting configuration, and the first delay value and the second delay value may be equal. Alternatively, the processing circuitry of the UE may obtain the first delay value and the second delay value different TimeToTrigger parameters included in the event triggered measurement reporting configuration, and the first delay value may be different from the second delay value, or in other words different time to trigger values may be configured for the early synchronization measurement reporting and the cell switch measurement reporting. The TimeToTrigger parameter may respectively specify a certain duration or a certain number of times the UE is required to measure the measurement results (and validate that the measurement results fulfil the entering condition) before reporting its first measurement result upon determining that the respectively the first condition or the second condition are met for measurements on a beam.

### < Leaving condition for cell switch>

According to a fourth exemplary implementation of the Second Solution, the processing circuitry, in operation, determines, from the event triggered measurement reporting configuration, a second leaving condition for deactivating the cell switch measurement reporting, and the processing circuitry, in operation, deactivates the cell switch measurement reporting, for those of the one or more beams, for which the cell switch measurement reporting is triggered and whose measurement results fulfil the second leaving condition.

The second leaving condition helps the processing circuitry of the UE to determine the execution condition for cell switch being not fulfilled (anymore) and hence a cell switch is not executed, for example in cases where the UE moves back towards the serving gNB (and away from a candidate gNB). For example, if the processing circuitry of the UE first determines that the measurement evaluated value of a certain beam fulfils the second condition, which serves as an entering condition for cell switch measurement reporting, the processing circuitry starts to prepare one or more measurement report(s) for this beam to report to the network that this beam fulfils the cell switch criteria (as configured in the event triggered measurement reporting configuration). Later, when a cell switch was not executed, and the processing circuitry of the UE determines that the "measurement evaluated value" of the same beam fulfils the second leaving condition, which serves as a leaving condition for cell switch measurement reporting, the processing circuitry deactivates the cell switch measurement reporting and stops (deactivates) preparing the measurement report(s) for the specific beam at least for the cell switch. For example, fulfilling the second leaving condition can mean, depending on the event identified in the event triggered measurement reporting configuration that the "measurement evaluated value" is smaller than a threshold or an offset configured in the event triggered measurement reporting configuration).

In order to avoid pingponing between activating and deactivating the cell switch measurement reporting, optionally a hysteresis value (see e.g. hysteresis in Fig. 4) can be defined for shifting the second leaving condition with respect to the second condition. This hysteresis value, which can be configured by the network by using the Hys parameter mentioned above, allows the network to shift the condition of measurement reporting deactivation to better channel conditions (or worse channel conditions depending on the event) compared to the channel conditions, which are configured as condition of measurement reporting activation.

Optionally, the network may configure UE to report the second leaving condition fulfilled situation (i.e. 'cell switch event criteria eliminated') in the event triggered measurement reporting configuration, by configuring the "reportOnLeave" parameter (for cell switch). Upon determining that the second leaving condition is fulfilled, the UE checks whether the reportOnLeave parameter (for cell switch) is configured. If the reportOnLeave parameter (for cell switch) is configured, then upon determining that the second leaving condition is fulfilled, the processing circuitry of the UE deactivates (or stops) cell switch measurement reporting after preparing and transmitting one last measurement report to the network. If the reportOnLeave parameter (for cell switch) is not configured, then upon determining that the second leaving condition is fulfilled, the processing circuitry of the UE just deactivates (or stops) cell switch measurement reporting without preparing and transmitting one last measurement report to the network.

Depending on the configuration of the event triggered measurement reporting configuration, there may occur the case that the UE first determines that the measurement evaluated value of a certain beam fulfils the second leaving condition (which means cell switch measurement reporting is to be deactivated) and at the same time fulfils the first condition (which means that condition for early sync measurement reporting is fulfilled).

In such cases, as a first option, the processing circuitry (of the UE), in operation, after deactivating the cell switch measurement reporting for a beam, determines to activate the early synchronization measurement reporting for the beam, when the measurement results of the beam fulfil the first condition.

That means, that even after determining that the leaving condition for cell switch measurement reporting is fulfilled (i.e. the cell switch criteria is not fulfilled anymore) for a specific beam, the UE would not stop preparing and transmitting measurement reports for the specific beam, as long as the UE determines that the (entering) condition for early synchronization (first condition) for the specific beam is still fulfilled (i.e. the early synchronization criteria is still fulfilled). However, the measurement reports for beams that fulfil the cell switch criteria may be configured to be prepared according to different parameters (e.g. different periodicity values) compared to the measurement reports for beams that fulfil the early synchronization criteria. Accordingly, upon determining that the second leaving condition is fulfilled, the UE may start to prepare the measurement reports according to the parameters configured for the early synchronization measurement reporting, instead of using the parameters configured for the cell switch measurement reporting.

Similar, in implementations where a first leaving condition for deactivating the early synchronization measurement reporting is configured (see description below), there may occur the case that the UE determines that the measurement evaluated value of a certain beam fulfils the second leaving condition (which means that cell switch measurement reporting is to be deactivated), but does not fulfil the first leaving condition (which means early synchronization measurement reporting should not be deactivated).

In such cases, in an optional implementation, the processing circuitry (of the UE), in operation, after deactivating the cell switch measurement reporting for a beam, determines to continue the early synchronization measurement reporting for the beam, when the measurement results of the beam do not fulfil the first leaving condition.

That means, that even after determining that the leaving condition for cell switch measurement reporting is fulfilled (i.e. the cell switch criteria is not fulfilled anymore) for a specific beam, the UE would not stop preparing and transmitting measurement reports for the specific beam, as long as the UE determines that the leaving condition for early synchronization (first leaving condition) for the specific beam is not fulfilled (i.e. the early synchronization criteria is still fulfilled).

Instead of continuing with the measurement reporting procedure, in another implementation example, the network (in particular the serving base station), upon receiving measurement reports indicating the fulfilment of the leaving condition (for beams/cells that have met the entering condition for cell switch before), may consider to instruct the UE to perform an early synchronization. This could especially facilitate using the same beam, which was reported for fulfilment of the leaving condition, during the ongoing LTM procedure or for a subsequent LTM procedure.

### < Measurement result evaluation at the base station>

A further improvement of the improved event triggered measurement reporting procedure according to the Second Solution provides improved measurement result evaluation at the base station. As presented above for some exemplary implementations, the gNB may rely on the results of measurements performed at the UE side, e.g. to determine the early synchronization execution (the timing and the selection of the target beam/cell) and to the cell switch execution (the timing and the selection of the target candidate beam/cell).

According to a fifth exemplary implementation of the Second Solution, the processing circuitry of the base station, in response to receiving from the UE a measurement report including measurement results, which fulfil the first condition and do not fulfil the second condition, evaluates whether to instruct the UE to execute early synchronization with a beam, for which the measurement results are reported.

In other words, in the fifth exemplary implementation, the base station (e.g. the serving gNB) receives one or more measurement report(s) for a beam (or for more beams), for which early synchronization had not been performed before. The measurement report(s) are transmitted by the UE, as a consequence of determining by the UE that the measurement results, e.g. in form of the measurement evaluated value, for the (one or more) beam(s) fulfil the first condition, which triggers measurement reporting for early synchronization, but do not fulfil the second condition, which triggers measurement reporting for cell switch. In response to receiving the measurement report, the base station determines the channel conditions for the reported beam(s) from the measurement report. In this scenario, the base station, for example, may determine that the early synchronization criteria may be fulfilled for one of the one or more reported beams, while the cell switch criteria is not fulfilled. Accordingly, the base station may select one of the reported beams and may instruct the UE to execute early synchronization with this reported beam in accordance with its determination.

According to a sixth exemplary implementation of the Second Solution, which may be implemented in addition or alternatively to the fifth exemplary implementation of the Second Solution, in response to receiving from the UE a measurement report including measurement results, which fulfil the second condition, for a beam among the one or more beams, (i) evaluates, on the basis of the measurement results, whether to instruct the UE to execute a low layer mobility cell switch, if early synchronization has been performed for the beam, (ii) instructs the UE to execute early synchronization for the beam, if early synchronization has not been performed for the beam, or (iii) evaluates, on the basis of the measurement results, whether to instruct the UE to perform to execute a Random Access Channel, RACH, based cell switch, if early synchronization has not been performed for the beam.

In a first scenario of the sixth exemplary implementation, the base station (e.g. the serving gNB) may receive one or more measurement report(s) for a beam (or for more beams), for which early synchronization had been performed before. The measurement report(s) are transmitted by the UE, as a consequence of determining by the UE that the measurement results, e.g. in form of the measurement evaluated value, for the (one or more) beam(s) fulfil the second condition, which triggers measurement reporting for cell switch. In response to receiving the measurement report, the base station determines the channel conditions for the reported beam(s) from the measurement report. In this scenario, the base station, for example, may determine that the cell switch criteria may be fulfilled for one of the (one or more) reported beam(s) and that the UE has performed early synchronization already with the beam. Accordingly, the base station (e.g. the serving gNB) may instruct the UE to execute an (LTM) cell switch with the reported beam in order to perform a low mobility (RACH-less) cell switch with a target candidate cell associated with the one reported beam.

In a second scenario of the sixth exemplary implementation, the base station may receive one or more measurement report(s) for a beam (or for more beams), for which early synchronization had not been performed before, but which fulfils already the cell switch criteria. This situation may occur, if the measurement report(s) are transmitted by the UE, as a consequence of determining by the UE that the measurement results, e.g. in form of the measurement evaluated value, for the (one or more) beam(s) directly fulfil the second condition, which triggers measurement reporting for cell switch, when early synchronization was not performed before. This situation may occur in dynamic channel condition, e.g. when the UE moves fast towards (and above) the cell edge of the serving cell, so that the UE may determine, for a specific beam, that the cell switch condition is satisfied, without prior performing early synchronization measurement reporting (and execution) for that beam. In such dynamic channel condition, it is , for example, also possible that the base station determines, for a specific beam, that the cell switch condition is satisfied, and trigger cell switch measurement reporting, after the base station had instructed an early synchronization execution for another beam.

Especially, in response to receiving the measurement report, the base station determines the channel conditions for the reported beam(s) from the measurement report, and in the second scenario will determine that the cell switch criteria (and also the early synchronization criteria) is fulfilled for at least one of the reported beams, while early synchronization is not executed for the same beam(s). As an option, the base station (e.g. the serving gNB) can then decide to trigger the early synchronization for at least one of the reported beams first, before triggering the (LTM) cell switch procedure, which uses a RACH-less execution, with a target candidate cell associated with the selected reported beam. As another option, the base station (e.g. the serving gNB) can then decide to trigger a cell switch procedure with RACH-based execution (i.e. not to perform the early synchronization procedure before the cell switch).

Different and exemplary variants of the improved event triggered measurement reporting procedure according to the Second solution are explained in the following. For the explanation of the different implementation, some exemplary and simplifying assumptions are made.

As an overview, in a First variant of the Second solution, there is introduced a leaving condition for the early synchronization measurement reporting, which is derivable at the UE from the event triggered measurement reporting configuration and allows for deactivating the measurement reporting triggered by the early synchronization criteria.

In a Second variant of the Second solution, the leaving condition for cell switch measurement reporting is used as a basis for defining the first (entering) condition triggering for early synchronization measurement reporting.

In a Third variant of the Second solution, the event triggered measurement reporting configuration may be configured such as to allow the UE to determine separate entering conditions for triggering the early synchronization measurement reporting and for triggering the cell switch measurement reporting from a parameter configured by the event triggered measurement reporting configuration.

In a Fourth variant of the Second solution, the event triggered measurement reporting configuration may be configured such as to allow the UE to determine separate entering conditions for triggering the early synchronization measurement reporting and for triggering the cell switch measurement reporting from different parameters configured by the event triggered measurement reporting configuration.

### First variant of the Second solution

According to the First variant of the Second solution, the processing circuitry, in operation, determines, from the event triggered measurement reporting configuration, a first leaving condition for deactivating the early synchronization measurement reporting, based on one of the second condition and the second leaving condition; and deactivates the early synchronization measurement reporting, for those of the one or more beams, for which the cell-switch measurement reporting is triggered and whose measurement results fulfil the first leaving condition.

The first leaving condition helps the processing circuitry of the UE to avoid duplication of measurement reports for beams where also the entering condition (second condition) for triggering cell switch measurement reports is fulfiled, for example in cases where the UE moves further towards the candidate gNB (and away from a serving gNB). For example, if the processing circuitry of the UE first determines that the measurement evaluated value of a certain beam fulfils the first condition, which serves as an entering condition for triggering early synchronization measurement reporting, the processing circuitry starts to prepare one or more measurement report(s) for this beam to report to the network that this beam fulfils the early synchronization criteria (as configured in the event triggered measurement reporting configuration). Later, when early synchronization was executed (or not), and the UE moves further towards the candidate gNB, i.e. away from the serving cell, the processing circuitry of the UE may determines that the "measurement evaluated value" of the same beam does not fulfil the first condition anymore. In response to such determination, the processing circuitry may deactivate the early synchronization measurement reporting and stops (deactivates) preparing the measurement report(s) for the specific beam for early synchronization.

In other words, the non-fulfilment of the first condition may serve as the first leaving condition for deactivating early synchronization measurement reporting. For example, here, fulfilling the first leaving condition can mean, depending on the event identified in the event triggered measurement reporting configuration that the "measurement evaluated value" is larger than a threshold or an offset configured in the event triggered measurement reporting configuration.

In an exemplary implementation of the First variant of the Second solution, a threshold defined in the first leaving condition corresponds to a threshold defined in the second leaving condition. In other words, in order to keep the event triggered measurement reporting configuration, the first leaving condition for deactivating the early synchronization measurement reporting could be formulated by using the formulation of the second leaving condition, which is used for deactivating the measurement reporting. In this manner, it could be possible to obtain three LTM event trigger conditions from the event triggered measurement reporting configuration by using two event trigger formulations, namely the entering condition for cell switch (second condition) and the leaving condition for cell switch (second leaving condition). In this manner, it is facilitated to avoid a complex configuration, because few parameters need to be configured for obtaining the three conditions at the UE. For example, the UE could formulate the following conditions
- Condition for early synchronization meas. reporting: Meas. Result < Leaving condition
- Entering condition for cell switch meas. reporting: Meas. Result > Entering condition.
- Leaving condition for cell switch meas. reporting: Meas. Result < Leaving condition

The Leaving condition for cell switch meas. reporting may also be the condition which, upon fulfilment and after the entering condition for cell switch meas. reporting was triggered first, triggers the report on leave procedure, which was described above in connection with the Second solution (depending on the configuration of the ReportOnLeave parameter).

In the above three condition formulations, the sign "<" means that the measurement result, in particular the measurement evaluated value, does not fulfil (e.g. is smaller than) a requirement, which is defined by the condition, and the sign ">"means that the measurement result, in particular the measurement evaluated value, fulfils (e.g. is larger than) a requirement, which is defined by the condition.

In this respect, it is notable that the condition for early synchronization measurement reporting and for cell switch measurement reporting are formulated the same, which means that the early synchronization measurement reporting is only activated for those beams, for which the cell switch measurement reporting is deactivated, and vice versa. Accordingly, duplication of measurement reporting for a beam is avoided. Furthermore, the condition for early synchronization measurement reporting serves as an implicit leaving condition for deactivating the early synchronization measurement reporting, because the early synchronization measurement reporting is not performed (deactivated) in response to determining that the measurement results do not fulfil the condition for early synchronization measurement reporting (i.e. do not fulfil the requirements formulated by the leaving condition).

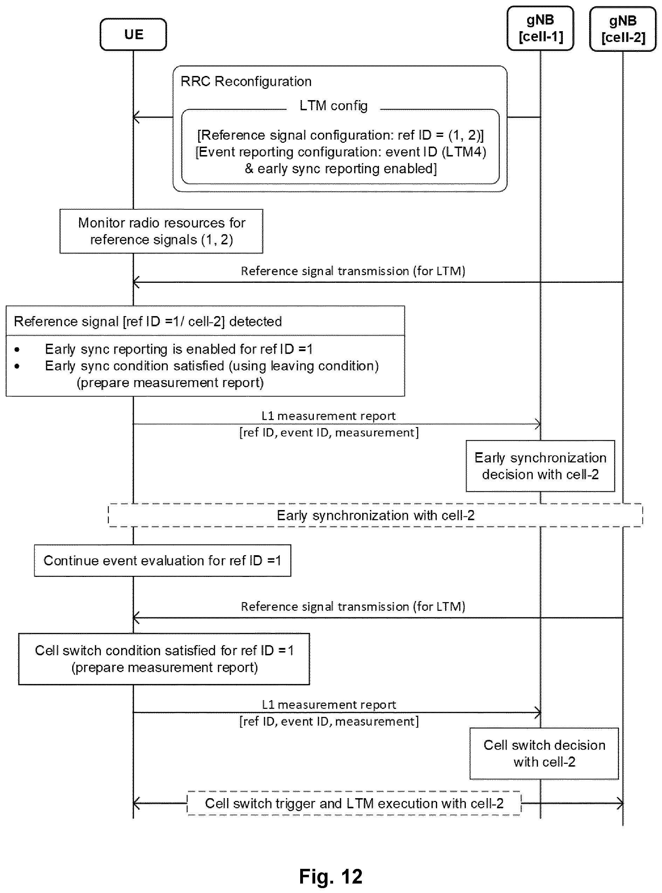

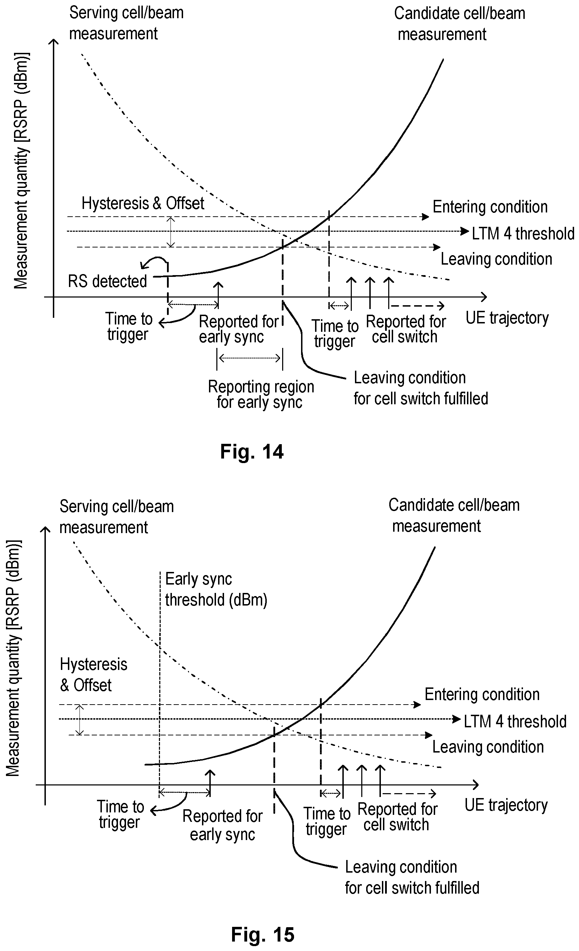

**Fig. 12** shows a signaling diagram for illustrating an example of an improved event triggered measurement reporting procedure according to the First variant of the Second solution. The improved event triggered measurement reporting procedure involves a UE, a source gNB and a target gNB. **Fig. 14** illustrates an example of a resulting measurement reporting operation performed by a UE according to the signaling diagram illustrated in Fig. 12. In the example shown in Fig. 12, the event triggered measurement reporting configuration comprises a reference signal configuration, which identifies one or more beams, for which the UE should evaluate measurement and perform measurement reporting, and an event reporting configuration, which identifies an event ID and specifies whether early synchronization measurement reporting should be enabled. In the illustrated example, the reference signal configuration specifies the reference signals with ref. ID = (1, 2), and the event reporting configuration specifies the event with event ID 4, i.e. LTM4 (Beam of candidate cell becomes better than absolute threshold), while early synchronization measurement reporting is configured as enabled. The event triggered measurement reporting configuration is transmitted from the serving cell (here gNB [cell1]) to the UE and the UE obtains the first condition, the second condition, the first leaving condition and the second leaving condition from the parameters specified in the event triggered measurement reporting configuration and the formulations of the three condition formulations outlined above. As the first (entering) condition, because no specific early synchronization offset or early synchronization threshold are specified, the UE determines to trigger the early synchronization measurement reporting, for those of the indicated beams, for which the corresponding reference signal is correctly detected and which fulfil the condition for early synchronization measurement reporting. As the first leaving condition, the UE determines to deactivate the early synchronization measurement reporting, for those of the indicated beams, for which the condition for early synchronization measurement reporting is not fulfilled (anymore), after it was first fulfilled. The first leaving condition, the second (entering) condition and the second leaving condition can be obtained by using the above-outlined condition formulations.

In line with the configuration, the UE evaluates the measurements of the identified reference signals with ref. ID = (1, 2), which here for example are transmitted by the candidate cell gNB [cell2] and monitors for the detection of such reference signals.

In the illustrated example, a L1 measurement report for early synchronization is transmitted, when the identified reference signals (here associated with beams of candidate cell gNB [cell2]) are detected at UE. In particular, when the UE correctly detects a reference signal, which is identified in the event triggered measurement reporting configuration, and which satisfies the early synchronization condition, measurement reports are prepared and sent to the serving gNB according to early synchronization reporting procedure configured in the event triggered measurement reporting configuration. In the illustrated example, for example it is configured to transmit a single measurement report in the early synchronization measurement reporting procedure, but the early synchronization measurement reporting procedure could also specify one of periodic reporting, semi-persistent reporting, or aperiodic reporting instead, for the detected reference signals, whose measurement results meet the Condition for early synchronization meas. reporting.

In response to receiving the measurement report for early synchronization, the serving base station (here gNB [cell1]) can determine that the candidate cell/beam associated with the reported reference signal is in communication range with the UE. Based on the measurement results included in the measurement report, the serving base station evaluates whether to trigger early DL and UL synchronization procedure at the UE for one of the reported reference signals.

To ensure valid reporting when the candidate cell reference signals are detected, the UE may be configured with the time to trigger parameter for the early synchronization measurement reporting (which may be a same or a different parameter as used for entering condition) to repeat measurements for a certain number of times (or repeated for certain duration of time) before beginning to transmit measurement reports. Details on the Time to Trigger procedure can be found in the description provided before in connection with the Second solution. Fig. 14 schematically illustrates a delay of the transmission of the early synchronization measurement reports configurable by the time to trigger parameter.

In another possible implementation scenario, the UE could determine that if early DL synchronization is successfully achieved, when the first condition is fulfilled and the early synchronization measurement reporting is triggered for the identified candidate cells or candidate beams, then the latest measurements are reported to the network (serving base station) as a request for early UL synchronization.

As illustrated in Fig. 12 and Fig. 14, after the early synchronization is executed, the UE may move further towards the candidate cell, so that the channel conditions for communication with the candidate beam (or candidate cell) may improve (see solid line in Fig. 14), while the channel conditions for communication with the serving beam (or serving cell) may degrade (see dashdotted line in Fig. 14). Accordingly, after preforming the early synchronization execution, the UE continues to evaluate the measurement results of the identified reference signals (more specifically of all identified reference signals, not only the one or more for which early synchronization had been performed). When the measurement results (e.g. the measurement evaluated value) of one or more of the identified reference signals fulfil the entering condition (for example, reference signals associated with candidate beams become better than absolute threshold for the event LTM4 illustrated in Fig. 14), the UE activates the cell switch measurement reporting procedure for the beams (or cells) associated with those one or more reference signals. For example, as illustrated in Fig. 12, the measurement results with the reference signal with the ID =1 fulfil the entering condition, so that the UE prepares (L1) measurement reports for the beam with the ID =1 (optionally after the Time to Trigger condition for cell switch measurement reporting has also been fulfilled). In the illustrated example, the event triggered measurement reporting configuration defines to periodically transmit measurement reports for those beams (or cells), for which cell switch measurement reporting is activated (i.e. the beam or cell which is associated with reference signal having ID =1). Alternatively, the event triggered measurement reporting configuration may define one of semi-persistent reporting, or aperiodic reporting or transmiting a single measurement report, for those beams (or cells), for which cell switch measurement reporting is activated. Based on the reported measurement results (here for the reference signal having ID =1), the serving base station (here gNB [cell1]) can decide whether to instruct the UE to execute a LTM cell switch to a candidate beam (cell - here provided by gNB [cell2]) or not. In the present example, the base station, after evaluating the reported measurement results, decides to instruct the UE to execute a LTM cell switch to the candidate beam (cell) associated with the reference signal having ID =1 as target beam (cell).

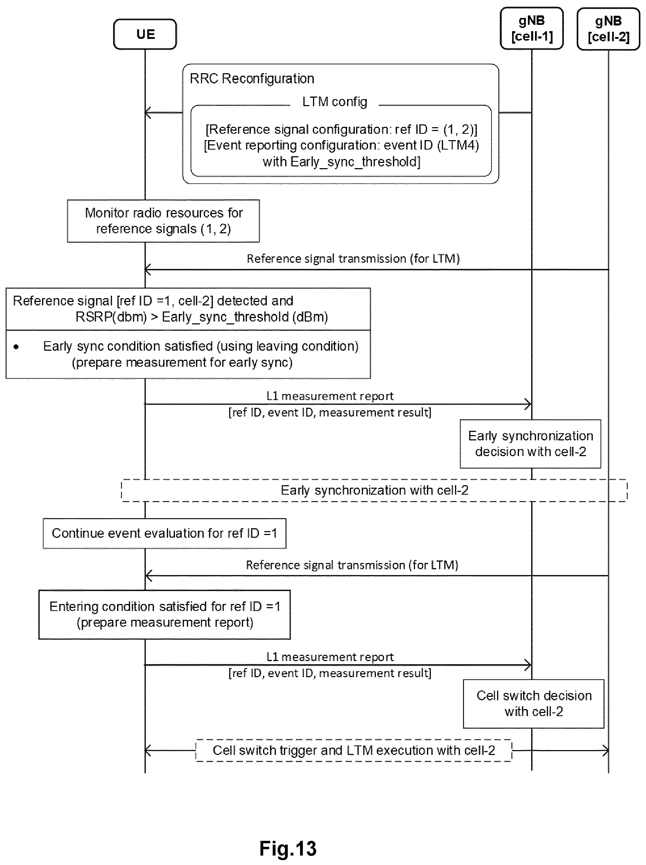

In order to facilitate avoiding the transmission of measurement reports for early synchronization on a larger number of cells/beams, the condition for early synchronization measurement reporting can optionally also include an early synchronization threshold criteria, which is required to be satisfied before the early synchronization is triggered for a specific beam. For example, as illustrated in **Fig. 13** and **Fig. 15****,** the event triggered measurement reporting configuration may additionally include a parameter "Early_sync_threshold", which could be used to configure the early synchronization threshold criteria at the UE for the various LTM events.

For example, the processing circuitry, in operation, determines as the first condition to trigger the early synchronization measurement reporting, for those of the one or more beams, for which the processing circuitry, in operation, detects a corresponding reference signal and for which a measurement evaluated value is larger than an early synchronization threshold.

In this example, the UE could formulate the following condition as a condition for activating (performing) early synchronization measurement reporting:
Meas. Result > Early_sync_threshold AND Meas. Result < Leaving condition

With this formulation, the early synchronization measurement reporting is activated (performed) for those beams, for which the cell switch measurement reporting is deactivated and for which the early synchronization threshold criteria is fulfilled. Still, the condition for early synchronization measurement reporting serves as an implicit leaving condition for deactivating the early synchronization measurement reporting, because the early synchronization measurement reporting is not performed (deactivated) in response to determining that the measurement results do not fulfil the condition (i.e. do not fulfil the requirements formulated by the leaving condition because the channel conditions for the respective reference signal become better).

Accordingly, as illustrated in Fig. 13 and Fig. 15, the UE then only transmits one or more measurement reports for early synchronization, when the identified reference signals (here again with ref. ID = (1, 2)) are detected and the measurement evaluated values (here the RSRP) for the detected reference signals fulfils the early synchronization criteria (here is larger than an early synchronization threshold) obtained from the parameter "Early_sync_threshold".

The early synchronization threshold criteria may be defined differently for the different LTM events.

For example, the processing circuitry (of the UE), in operation, may determine to trigger the early synchronization measurement reporting, when a measurement evaluated value of a serving beam, which is used for signal transmission and/or signal reception in a serving cell is less than an early synchronization threshold.

In this example, the UE could formulate the following condition as a condition for activating (performing) early synchronization measurement reporting:
Serving_cell_meas. result < Early_sync_threshold AND
LTMxEvent_meas. result < Leaving condition

For example, this condition could be applied to trigger the early synchronization measurement reporting depending on the channel conditions in the serving cell, especially in response to determining that the serving cell/ beam becomes worse than the configured threshold value (or degraded).

In another example, the processing circuitry, in operation, determines as the first condition to trigger the early synchronization measurement reporting, when a measurement evaluated value of a candidate beam, which is used for signal transmission and/or a signal reception after the cell switch from the serving cell to the target candidate cell, is larger than an early synchronization threshold.

In this example, the UE could formulate the following condition as a condition for activating (performing) early synchronization measurement reporting:
Candidate_cell_meas result > Early_sync_threshold AND
LTMxEvent_meas < Leaving condition

For example, this condition could be applied to trigger the early synchronization measurement reporting depending on the channel conditions of the candidate cell/beam, especially in response to determining that the measurement results for the candidate cell/beam become better than the configured threshold value.

In another example, the processing circuitry, in operation, determines as the first condition to trigger the early synchronization measurement reporting, when a measurement evaluated value of the serving beam is less than a first early synchronization threshold, and when the measurement evaluated value of the candidate beam is larger than a second early synchronization threshold.

In this example, the UE could formulate the following condition as a condition for activating (performing) early synchronization measurement reporting:
Serving_cell_meas. result < Early_sync_threshold1 AND
Candidate_cell_meas result > Early_sync_threshold2 AND
LTMxEvent_meas < Leaving condition

For example, this condition could be applied to trigger the early synchronization measurement reporting depending on the channel conditions in the serving cell and in the candidate cell, especially in response to determining that that the serving cell/ beam becomes worse than the configured first threshold value (or degraded) and the candidate cell/ beam becomes better than the configured second threshold value. In this example, the event triggered measurement reporting configuration may additionally include the two parameters "Early_sync_threshold1" and "Early_sync_threshold2", which could be used to configure the early synchronization threshold criteria at the UE. The UE may then obtain the first early synchronization threshold and the second early synchronization threshold from the two parameters "Early_sync_threshold1" and "Early_sync threshold2".

In all the above cases, the early synchronization threshold(s) could be configured in expressed in dBm in case of RSRP as measurement evaluated value, or in dB in case of RSRQ and RS-SINR as measurement evaluated value. Furthermore, for all the conditions a TimeToTrigger parameter may be configured for delaying the activation of the early synchronization measurement reporting.

Introducing the early synchronization threshold criteria facilitates avoiding the transmission of measurement reports for early synchronization on a larger number of cells/beams at the UE side to make the measurement reporting procedure more radio resource efficient. Furthermore, the introduction of the early synchronization threshold criteria facilitates to configure a more precise measurement range for triggering the early synchronization measurement reports at the network side.

### Second variant of the Second solution

The Second variant of the Second solution differs from the First variant of the First solution in that the leaving condition (for cell switch measurement reporting) is used as a basis to formulate the entering condition for triggering the early synchronization measurement reporting by changing the sign of the leaving condition (for cell switch measurement reporting).

According to the Second variant of the Second solution, the processing circuitry, in operation, determines the first condition by using the second leaving condition. Optionally, the processing circuitry, in operation, may also determine the first leaving condition by using the second leaving condition.

In this manner, it is possible to obtain three LTM event trigger conditions from the event triggered measurement reporting configuration by using two event trigger formulations, namely the entering condition for cell switch (second condition) and the leaving condition for cell switch (second leaving condition). Accordingly, it is facilitated to avoid a complex configuration, because few parameters need to be configured for obtained the three conditions at the UE. For example, the UE could formulate the following conditions
- Condition for early synchronization meas. reporting: Meas. Result > Leaving condition
- Entering condition for cell switch meas. reporting: Meas. Result > Entering condition
- Leaving condition for cell switch meas. reporting: Meas. Result < Leaving condition

The Leaving condition for cell switch meas. reporting may also be the condition which, upon fulfilment and after the entering condition for cell switch meas. reporting was triggered first, triggers the report on leave procedure, which was described above in connection with the Second solution, depending on the configuration of the ReportOnLeave parameter.

In other words, the condition for early synchronization measurement reporting is obtained by turning the "<" (smaller than) character or the ">" (greater than) character, which is used to obtain the leaving condition for cell switch measurement reporting. Or stated differently again, in the Second variant of the Second solution, early measurement reporting is triggered in those ranges of the measurement evaluated value, for which the leaving condition defined for cell switch measurement reporting is not fulfilled.

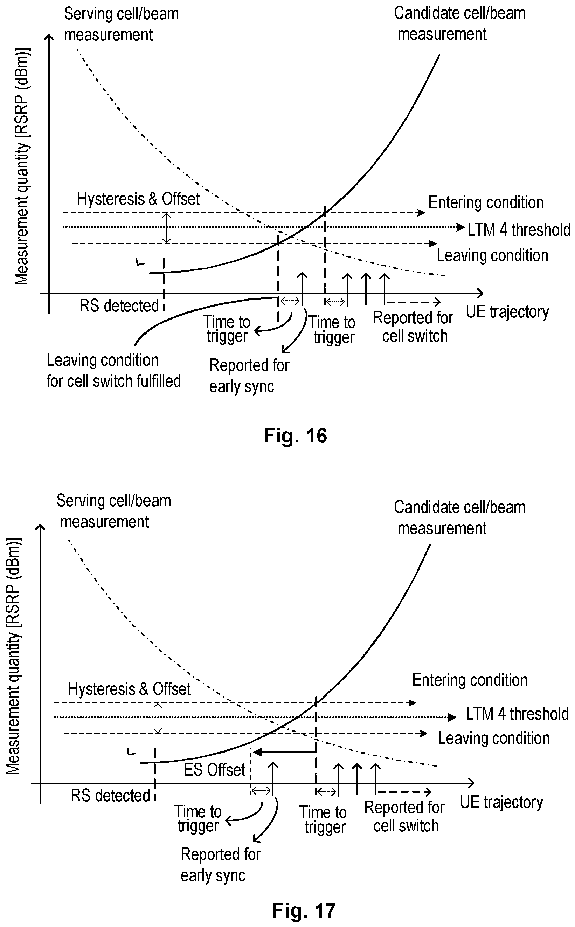

As illustrated in the example of **Fig. 16** (for event LTM4), in the Second variant of the Second solution the UE only performs measurement reporting, when the either the early synchronization reporting condition is triggered (fulfilled), i.e. at least the leaving condition for cell switch measurement reporting is not fulfilled, or when the entering condition for cell switch measurement reporting is triggered (fulfilled). Accordingly, the leaving condition for cell switch measurement reporting serves as the first leaving condition for deactivating early synchronization measurement reporting and as the second leaving condition for deactivating cell switch measurement reporting.

In this manner, the Second variant of the Second solution facilitates avoiding a complex configuration, because few parameters need to be configured for obtained the three conditions at the UE, and facilitates avoiding the transmission of measurement reports for early synchronization on a larger number of cells/beams (because the requirements for triggering early synchronization measurement are enhanced compared to the First variant of the Second solution).

At the same time, it is beneficial for the Second variant of the Second solution, if a non-zero hysteresis parameter is configured in the event triggered measurement reporting configuration.

### Third variant of the Second solution

The Third variant of the Second solution differs from the First variant of the First solution in that the condition for early synchronization measurement reporting is formulated as an entry condition by using an indicated early synchronization offset, without explicitly formulating a leaving condition for early synchronization measurement reporting.

According to the Third variant of the Second solution, the event triggered measurement reporting configuration indicates an early synchronization offset, and the processing circuitry of the UE, in operation, determines the first condition by using the early synchronization offset.

In an optional implementation of the Third variant of the Second solution, the processing circuitry, in operation, determines the first condition by using the early synchronization offset and the second condition. Alternatively, the processing circuitry, determines the first condition by using the early synchronization offset and the second leaving condition.

The use of the early synchronization offset indicated in the event triggered measurement reporting configuration facilitates to provide a simple configuration structure and to define an entering condition for triggering the early synchronization measurement reporting without affecting the entering condition for triggering the cell switch measurement reporting.

For example, if the processing circuitry of the UE first determines that the measurement evaluated value of a certain beam fulfils the first condition, which serves as an entering condition for triggering early synchronization measurement reporting, the processing circuitry starts to prepare one or more measurement report(s) for this beam to report to the network that this beam fulfils the early synchronization criteria (as configured in the event triggered measurement reporting configuration).

In particular, by using the early synchronization offset the UE could formulate the following three conditions by using two event trigger formulations (for example derived from corresponding formulations of the Ax events described above):
- Condition for early synchronization meas. reporting:
   Meas. Result + Early_sync_offset > Entering condition
- Entering condition for cell switch meas. reporting: Meas. Result > Entering condition
- Leaving condition for cell switch meas. reporting: Meas. Result < Leaving condition

Again, the Leaving condition for cell switch meas. reporting may also be the condition which, upon fulfilment and after the entering condition for cell switch meas. reporting was triggered first, triggers the report on leave procedure, which was described above in connection with the Second solution, depending on the configuration of the ReportOnLeave parameter.

In this respect, it is notable that the condition for early synchronization measurement reporting is obtained from the entering condition for cell switch measurement reporting by adding an Early_sync_offset to the measurement evaluated value. This enables to trigger the measurement reporting for early synchronization already for channel conditions where the measurement reporting for cell switch is still deactivated. This behavior is illustrated by the example of **Fig. 17****,** where the UE triggers the measurement reporting for early synchronization (see the dashed line ES Offset as triggering point for early sync. measurement reporting) before the UE moves in a region where the cell switch criteria is fulfilled.

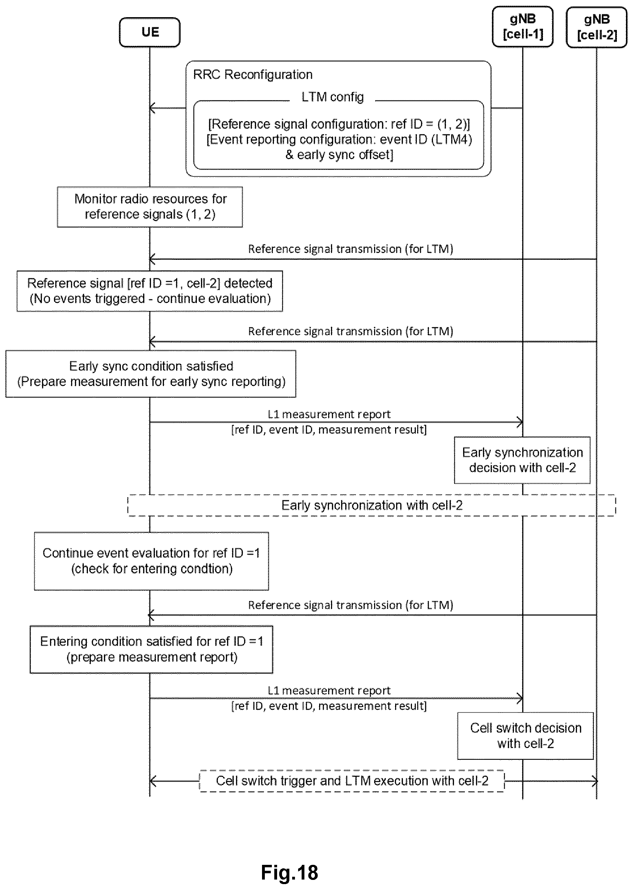

**Fig. 18** shows a signaling diagram for illustrating an example of an improved event triggered measurement reporting procedure according to the Third variant of the Second solution.

In the example shown in Fig. 18, the event triggered measurement reporting configuration comprises a reference signal configuration, which identifies one or more beams, for which the UE should evaluate measurement and perform measurement reporting, an event reporting configuration, which identifies an event ID, and a parameter "Early_sync_offset" for determining the condition for early synchronization meas. reporting. In the illustrated example, the reference signal configuration specifies the reference signals with ref. ID = (1, 2), and the event reporting configuration specifies the event with event ID 4, i.e. LTM4 (Beam of candidate cell becomes better than absolute threshold), and an early synchronization offset. The event triggered measurement reporting configuration is transmitted from the serving cell (here gNB [cell1]) to the UE and the UE obtains, the second condition as entering condition for cell switch measurement reporting, the second leaving condition for deactivating the cell switch measurement reporting from the parameters specified in the event triggered measurement reporting configuration. In addition, the UE obtains the first condition as an entering condition for triggering the early synchronization measurement reporting by using the second condition and the early synchronization offset indicated in the event triggered measurement reporting configuration.

In line with the configuration, the UE evaluates the measurements of the identified reference signals with ref. ID = (1, 2), which here for example are transmitted by the candidate cell gNB [cell2] and monitors for the detection of such reference signals. As long as the measurement results of the identified reference signals do not fulfil the first condition (i.e. the condition for early synchronization meas. reporting), the UE does not trigger the early synchronization measurement reporting and continues the evaluation of the detected reference signals.

Upon determining that measurement results of one or more of the identified beams fulfil the first condition, one or more L1 measurement report(s) for early synchronization are transmitted for those reference signals. In the illustrated example, for example it is configured to transmit a single measurement report in the early synchronization measurement reporting procedure, but the early synchronization measurement reporting procedure could also specify one of periodic reporting, semi-persistent reporting, or aperiodic reporting instead, for the detected reference signals.

In response to receiving the measurement report for early synchronization, the serving base station (here gNB [cell1]) can evaluate whether to trigger early DL and UL synchronization procedure at the UE for the beam (cell) associated with one of the reported reference signals.

In another possible implementation scenario, the UE could determine that when the first condition is fulfilled and if early DL synchronization is successfully achieved, then the early synchronization measurement reporting is triggered for the identified candidate cells or candidate beams, to report the latest measurements to the network as a request for early UL synchronization.

The remaining operation (with respect to the cell switch measurement reporting) illustrated in Fig. 18 is equal to the operation described with reference to Fig. 12 and is omitted here.

It should be noted that the event triggered measurement reporting procedure according to the Third variant of the Second solution differs from the earlier described entering condition shifting method (as described for the first example of an improved event triggered measurement reporting procedure according to the First solution) because it provides an opportunity to further optimize resource utilization for each measurement reporting region. Especially, the entering condition for cell switch could be configured to define a region where measurement reports are repeatedly triggered with a certain periodicity information, while the entering condition for early synchronization (which is shifted by the early synchronization offset) could be configured to define a region where measurement reports are reported only once or, with a different periodicity configuration (for example, a very low periodicity to save bandwidth).

Because the First variant of the Second solution defines a leaving condition for early synchronization measurement and the Third variant of the Second solution defines an entering condition, it is also possible to combine both variants. For example, it may be that the UE determines an entering condition for early synchronization measurement reporting by using the Condition for early synchronization meas. reporting as defined in the Third variant of the Second solution and a leaving condition for early synchronization measurement reporting by using the Condition for early synchronization meas. reporting as defined in the First variant of the Second solution.

### Fourth variant of the Second solution

The Fourth variant of the Second solution differs from the other variants of the First solution in that separate parameter sets, which each include at least one parameter, are included in the event triggered measurement reporting configuration for enabling the UE to obtain independent entering and leaving conditions for early synchronization measurement reporting and for cell switch measurement reporting.

According to the Fourth variant of the Second solution, the event triggered measurement reporting configuration indicates a first parameter set for determining the first condition, and a second parameter set for determining the second condition, and the processing circuitry, in operation, determines the first condition by using the first parameter set and determines the second condition by using the second parameter set. As an optional implementation of the Fourth variant of the Second solution, the processing circuitry, in operation, may also determines a first leaving condition, which is useable for deactivating the early synchronization measurement reporting, by using the first parameter set and/or may determines a second leaving condition, which is useable for deactivating the cell switch measurement reporting by using the second parameter set.

For example, the event triggered measurement reporting configuration may comprise the first parameter set including at least a first threshold parameter Threshold1 (or alternatively, depending on the event a first offset parameter), eventually together with other event-related parameter, like Hys, Ofn, OCN, etc., and the second parameter set including at least a second threshold parameter Threshold2 (or alternatively, depending on the event a second offset parameter), eventually together with other event-related parameter, like Hys, Ofn, OCN, etc. The UE may then obtain the first condition (as entering condition for early synchronization measurement reporting) and the first leaving condition (as leaving condition for early synchronization measurement reporting) by using the first threshold parameter Threshold1 (and eventually the other event-related parameter). In addition, the UE may then obtain the second condition (as entering condition for cell switch measurement reporting) and the second leaving condition (as leaving condition for cell switch measurement reporting) by using the second threshold parameter Threshold2 (and eventually the other event-related parameter).

Accordingly, by using the dual threshold parameter (or offset parameter) sent to the UE, the UE may obtain four LTM related measurement reporting conditions. In particular, by using the dual threshold parameter Threshold1 and Threshold2 (or the dual offset parameter) the UE could formulate the following four conditions by using two sets of event trigger formulations (for example derived from corresponding formulations of the Ax events described above):
- Entering Condition for early synchronization meas. reporting:
   Meas. Result > Entering condition_threshold1
- Leaving condition for early synchronization meas. reporting:
   Meas. Result < Leaving condition_threshold1
- Entering condition for cell switch meas. reporting:
   Meas. Result > Entering condition_threshold2
- Leaving condition for cell switch meas. reporting:
   Meas. Result < Leaving condition_threshold2

Again, the Leaving condition for cell switch meas. reporting may also be the condition which, upon fulfilment and after the entering condition for cell switch meas. reporting was triggered first, triggers the report on leave procedure, which was described above in connection with the Second solution, depending on the configuration of the ReportOnLeave parameter. But also the Leaving condition for early synchronization meas. reporting be a condition which, upon fulfilment and after the entering condition for early synchronization meas. reporting was triggered first, triggers the report on leave procedure, which was described above in connection with the Second solution, depending on the configuration of the ReportOnLeave parameter. In the Fourth variant of the Second solution, the UE may only stop measurement reporting completely, when the leaving condition for early synchronization measurement reporting is fulfilled and when the leaving condition for cell switch measurement reporting is fulfilled.

With the above conditions, measurement results the UE only is required to report measurement results when either the Entering Condition for early synchronization meas. reporting is fulfilled, or when entering condition for cell switch meas. reporting is fulfilled. Accordingly, configuring the two threshold (or offset) parameters allows to independently fine-tune the two measurement ranges where measurement reporting should occur.

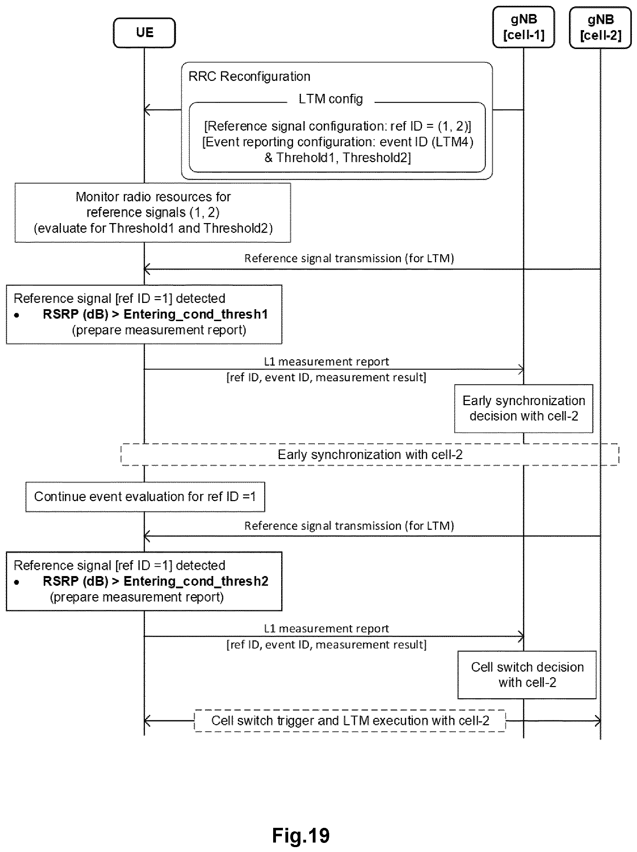

**Fig. 19** shows a signaling diagram for illustrating an example of an improved event triggered measurement reporting procedure according to the Fourth variant of the Second solution.

In the example shown in Fig. 19, the event triggered measurement reporting configuration comprises a reference signal configuration, which identifies one or more beams, for which the UE should evaluate measurement and perform measurement reporting, an event reporting configuration, which identifies an event ID, and the threshold parameters "Threshold1" and "Threshold2" for determining the conditions for early synchronization meas. reporting and cell switch measurement reporting. In the illustrated example, the reference signal configuration specifies the reference signals with ref. ID = (1, 2), and the event reporting configuration specifies the event with event ID 4, i.e. LTM4 (Beam of candidate cell becomes better than absolute threshold), and two threshold values. The event triggered measurement reporting configuration is transmitted from the serving cell (here gNB [cell1]) to the UE and the UE obtains, the first condition and the first leaving condition by using the parameters "Threshold1" (and the remaining event-related parameters specified in the configuration) as conditions for activating and deactivating early synchronization measurement reporting and obtains the second condition and the second leaving condition by using the parameters "Threshold2" (and the remaining event-related parameters specified in the configuration) as conditions for activating and deactivating the cell switch measurement reporting.

In line with the configuration, the UE evaluates the measurements of the identified reference signals with ref. ID = (1, 2), which here for example are transmitted by the candidate cell gNB [cell2] and monitors for the detection of such reference signals. As long as the measurement results of the identified reference signals do not fulfil the first condition (i.e. the entering condition for early synchronization meas. reporting), the UE does not trigger the early synchronization measurement reporting and continues the evaluation of the detected reference signals. Furthermore, as long as the measurement results of the identified reference signals do not fulfil the second condition (i.e. the entering condition for cell switch meas. reporting), the UE does not trigger the cell switch measurement reporting and continues the evaluation of the detected reference signals.

Upon determining that measurement results of one or more of the identified beams fulfil the first condition, one or more L1 measurement report(s) for early synchronization are transmitted for those reference signals. In the illustrated example, for example it is configured to transmit a single measurement report in the early synchronization measurement reporting procedure, but the early synchronization measurement reporting procedure could also specify one of periodic reporting, semi-persistent reporting, or aperiodic reporting instead, for the detected reference signals.

In response to receiving the measurement report for early synchronization, the serving base station (here gNB [cell1]) can evaluate whether to trigger early DL and UL synchronization procedure at the UE for the beam (cell) associated with one of the reported reference signals.

In another possible implementation scenario, the UE could determine that when the first condition is fulfilled and if early DL synchronization is successfully achieved, then the early synchronization measurement reporting is triggered for the identified candidate cells or candidate beams, to report the latest measurements to the network as a request for early UL synchronization.

The remaining operation (with respect to the cell switch measurement reporting) illustrated in Fig. 19 is equal to the operation described with reference to Fig. 12 and is omitted here.

By its specific design, the fourth variant of the Second solution facilitates providing a clean and elaborated design for obtaining two sets of entering and leaving condition for each LTMx event. Furthermore, it is only required to add one new field to the event triggered measurement reporting configuration (for configuring dual threshold or dual offset parameters), so that the configuration size can be lowered compared to the case of the second example of an improved event triggered measurement reporting procedure according to the First solution where two different events are configured for triggering early synchronization measurement reporting and for triggering cell switch measurement reporting.

Finally, it should be noted that in case that leaving conditions are not defined for LTMx events, the dual threshold (or offset) parameters could also be used to only derive two entering conditions, one for triggering early synchronization measurement reporting and one for triggering cell switch measurement reporting.

### Further Implementations

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signallingonly connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

**FIG. 18** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, subbandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Further Variants, including Hardware and Software Implementation of the present disclosure

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in sidelink communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also, a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments and solutions. The present embodiments and solutions are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, it is provided a user equipment, UE, comprising a transceiver, which in operation, receives from a base station, a configuration for event triggered measurement reporting, and processing circuitry, which in operation, obtains, from the event triggered measurement reporting configuration, a first condition for triggering early synchronization measurement reporting, which is performed in preparation of an early synchronization with a target candidate beam, and a second condition, which differs from the first condition, for triggering cell switch measurement reporting which is performed in preparation of a cell switch with a target candidate cell. The processing circuitry, in operation, performs, for one or more beams, an evaluation as to whether measurements on the one or more beams fulfil at least one of the first condition and of the second condition.

According to an embodiment, the processing circuitry, in operation, performs measurements on the one or more beams, and evaluates the measurements, wherein the processing circuitry, in operation, triggers early synchronization measurement reporting for those of the one or more beams, whose measurement results fulfil the first condition and do not fulfil the second condition, and wherein the processing circuitry, in operation, triggers the cell switch measurement reporting for those of the one or more beams, whose measurement results fulfil the second condition.

In an optional implementation of said embodiment, the measurements are one or more of radio measurements, distance-based measurements and time-based measurements.

According to an embodiment, the processing circuitry, in operation, determines, from the event triggered measurement reporting configuration, a second leaving condition for deactivating the cell switch measurement reporting, and the processing circuitry, in operation, deactivates the cell switch measurement reporting, for those of the one or more beams, for which the cell switch measurement reporting is triggered and whose measurement results fulfil the second leaving condition.

In an optional implementation of said embodiment, a hysteresis value is defined for shifting the second leaving condition with respect to the second condition.

According to an embodiment, the processing circuitry, in operation, determines, from the event triggered measurement reporting configuration, a first leaving condition for deactivating the early synchronization measurement reporting, based on one of the second condition and the second leaving condition; and deactivates the early synchronization measurement reporting, for those of the one or more beams, for which the cell-switch measurement reporting is triggered and whose measurement results fulfil the first leaving condition.

In an optional implementation of said embodiment, a threshold defined in the first leaving condition corresponds to a threshold defined in the second leaving condition.

According to an embodiment, the processing circuitry, in operation, determines one of the following conditions as the first condition:
- (i) to trigger the early synchronization measurement reporting, for those of the one or more beams, for which the processing circuitry, in operation, detects a corresponding reference signal;
- (ii) to trigger the early synchronization measurement reporting, for those of the one or more beams, for which the processing circuitry, in operation, detects a corresponding reference signal and for which a measurement evaluated value is larger than an early synchronization threshold;
- (iii) to trigger the early synchronization measurement reporting, when a measurement evaluated value of a serving beam, which is used for signal transmission and/or signal reception in a serving cell is less than an early synchronization threshold;
- (iv) to trigger the early synchronization measurement reporting, when a measurement evaluated value of a candidate beam, which is used for signal transmission and/or a signal reception after the cell switch from the serving cell to the target candidate cell, is larger than an early synchronization threshold;
- (v) to trigger the early synchronization measurement reporting, when a measurement evaluated value of the serving beam is less than a measurement evaluated value of the candidate beam and an early synchronization offset;
- (vi) to trigger the early synchronization measurement reporting, when a measurement evaluated value of the serving beam is less than a first early synchronization threshold, and when the measurement evaluated value of the candidate beam is larger than a second early synchronization threshold.

According to an embodiment, the processing circuitry, in operation, determines the first condition and the first leaving condition by using the second leaving condition.

According to an embodiment, the event triggered measurement reporting configuration indicates an early synchronization offset, and the processing circuitry, in operation, determines the first condition by using the early synchronization offset.

In a first optional implementation of said embodiment, the processing circuitry, in operation, determines the first condition by using the early synchronization offset and the second condition.

In a second optional implementation of said embodiment, the processing circuitry, in operation, determines the first condition by using the early synchronization offset and the second leaving condition.

According to an embodiment, the event triggered measurement reporting configuration indicates a first parameter set for determining the first condition, and a second parameter set for determining the second condition, and the processing circuitry, in operation, determines the first condition by using the first parameter set and determines the second condition by using the second parameter set.

In an optional implementation of said embodiment, the processing circuitry, in operation, determines a first leaving condition, which is useable for deactivating the early synchronization measurement reporting, by using the first parameter set and/or determines a second leaving condition, which is useable for deactivating the cell switch measurement reporting, by using the second parameter set.

According to an embodiment, the processing circuitry, in operation, determines a first delay value for delaying the transmission of a measurement report in response to determining that measurements on the one or more beams fulfil the first condition and do not fulfil the second condition, and the processing circuitry, in operation, determines a second delay value for delaying the transmission of a measurement report in response to determining that measurements on the one or more beams fulfil the second condition.

In a first optional implementation of said embodiment, the processing circuitry, in operation, obtains the first delay value and the second delay value from a same parameter of the event triggered measurement reporting configuration.

In a second optional implementation of said embodiment, the first delay value is one of a delay time or a number of measurement repetitions.

In a third optional implementation of said embodiment, the second delay value is one of a delay time or a number of measurement repetitions.

According to an embodiment, the processing circuitry, in operation, prepares one or more measurement reports including results of the measurement for those beams among the one or more beams, for which the early synchronization measurement reporting and/or the cell-switch measurement reporting is triggered and the transceiver, in operation, transmits the one or more measurement reports to the base station.

In an optional implementation of said embodiment, the transceiver transmits the one or more measurement reports to the base station using lower-layer messages.

According to an embodiment, the processing circuitry, in operation, after deactivating the cell switch measurement reporting for a beam, determines to activate the early synchronization measurement reporting for the beam, when the measurement results of the beam fulfil the first condition.

In an optional implementation of said embodiment, the processing circuitry, in operation, after deactivating the cell switch measurement reporting for a beam, determines to continue the early synchronization measurement reporting for the beam, when the measurement results of the beam do not fulfil the first leaving condition.

According to an embodiment, the one or more beams include at least one serving beam, which is used for signal transmission and/or signal reception in a serving cell, which is serving the UE, and at least one candidate beam, which is used for signal transmission and/or a signal reception after the cell switch from the serving cell to the target candidate cell, wherein the target candidate cell is one out of one or more candidates for participating in mobility for the UE.

In an optional implementation of said embodiment, the event triggered measurement reporting configuration identifies the one or more beams, and the processing circuitry, in operation, determines the one or more beams from the event triggered measurement reporting configuration, and, in operation, performs the event triggered measurement reporting for the identified one or more beams.

According to a second aspect, it is provided a base station comprising processing circuitry, which in operation, generates, a configuration for event triggered measurement reporting, wherein the event triggered measurement reporting configuration indicates a first condition for triggering early synchronization measurement reporting, which is performed by a UE in preparation of an early synchronization with a target candidate beam, and a second condition, which differs from the first condition, for triggering cell switch measurement reporting, which is performed by the UE in preparation of a cell switch with a target candidate cell, and a transceiver, which in operation, transmits the generated event triggered measurement reporting configuration to the UE.

According to an embodiment, the processing circuitry, in response to receiving from the UE a measurement report including measurement results, which fulfil the first condition and do not fulfil the second condition, evaluates whether to instruct the UE to execute early synchronization with a beam, for which the measurement results are reported.

According to an embodiment, the processing circuitry, in response to receiving from the UE a measurement report including measurement results, which fulfil the second condition, for a beam among the one or more beams,
- evaluates, on the basis of the measurement results, whether to instruct the UE to execute a low layer mobility cell switch, if early synchronization has been performed for the beam, and/or
- instructs the UE to execute early synchronization for the beam, if early synchronization has not been performed for the beam; and/or
- evaluates, on the basis of the measurement results, whether to instruct the UE to perform to execute a Random Access Channel, RACH, based cell switch, if early synchronization has not been performed for the beam.

According to a third aspect it is provided a communication system comprising the UE according to the first aspect or any embodiment/implementation thereof and/or a base station according to the second aspect or any embodiment/implementation thereof.

According to a fourth aspect, it is provided a method for a UE, wherein the method comprises receiving from a base station, a configuration for event triggered measurement reporting, and obtaining, from the event triggered measurement reporting configuration, a first condition for triggering early synchronization measurement reporting, which is performed in preparation of an early synchronization with a target candidate beam, and a second condition, which differs from the first condition, for triggering cell switch measurement reporting which is performed in preparation of a cell switch with a target candidate cell. The method further comprises performing, for one or more beams, an evaluation as to whether measurements on the one or more beams fulfil at least one of the first condition and of the second condition.

According to an embodiment, the method further comprises performing measurements on the one or more beams, and evaluating the measurements, wherein the early synchronization measurement reporting is triggered for those of the one or more beams, whose measurement results fulfil the first condition and do not fulfil the second condition, and wherein the cell switch measurement reporting is triggered for those of the one or more beams, whose measurement results fulfil the second condition.

In an optional implementation of said embodiment, the measurements are one or more of radio measurements, distance-based measurements and time-based measurements.

According to an embodiment, the method further comprises determining, from the event triggered measurement reporting configuration, a second leaving condition for deactivating the cell switch measurement reporting, and deactivating the cell switch measurement reporting, for those of the one or more beams, for which the cell switch measurement reporting is triggered and whose measurement results fulfil the second leaving condition.

In an optional implementation of said embodiment, a hysteresis value is defined for shifting the second leaving condition with respect to the second condition.

According to an embodiment, the method further comprises determining, from the event triggered measurement reporting configuration, a first leaving condition for deactivating the early synchronization measurement reporting, based on one of the second condition and the second leaving condition; and deactivating the early synchronization measurement reporting, for those of the one or more beams, for which the cell-switch measurement reporting is triggered and whose measurement results fulfil the first leaving condition.

In an optional implementation of said embodiment, a threshold defined in the first leaving condition corresponds to a threshold defined in the second leaving condition.

According to an embodiment, the method further comprises determining one of the following conditions as the first condition:
- (i) to trigger the early synchronization measurement reporting, for those of the one or more beams, for which the processing circuitry, in operation, detects a corresponding reference signal;
- (ii) to trigger the early synchronization measurement reporting, for those of the one or more beams, for which the processing circuitry, in operation, detects a corresponding reference signal and for which a measurement evaluated value is larger than an early synchronization threshold;
- (iii) to trigger the early synchronization measurement reporting, when a measurement evaluated value of a serving beam, which is used for signal transmission and/or signal reception in a serving cell is less than an early synchronization threshold;
- (iv) to trigger the early synchronization measurement reporting, when a measurement evaluated value of a candidate beam, which is used for signal transmission and/or a signal reception after the cell switch from the serving cell to the target candidate cell, is larger than an early synchronization threshold;
- (v) to trigger the early synchronization measurement reporting, when a measurement evaluated value of the serving beam is less than a measurement evaluated value of the candidate beam and an early synchronization offset;
- (vi) to trigger the early synchronization measurement reporting, when a measurement evaluated value of the serving beam is less than a first early synchronization threshold, and when the measurement evaluated value of the candidate beam is larger than a second early synchronization threshold.

According to an embodiment, the method further comprises determining the first condition and the first leaving condition by using the second leaving condition.

According to an embodiment, the event triggered measurement reporting configuration indicates an early synchronization offset, and the method further comprises determining the first condition by using the early synchronization offset.

In a first optional implementation of said embodiment, the method further comprises determining the first condition by using the early synchronization offset and the second condition.

In a second optional implementation of said embodiment, the method further comprises determining the first condition by using the early synchronization offset and the second leaving condition.

According to an embodiment, the event triggered measurement reporting configuration indicates a first parameter set for determining the first condition, and a second parameter set for determining the second condition, and the method further comprises determining the first condition by using the first parameter set and determines the second condition by using the second parameter set.

In an optional implementation of said embodiment, the method further comprises determining a first leaving condition, which is useable for deactivating the early synchronization measurement reporting, by using the first parameter set and/or determines a second leaving condition, which is useable for deactivating the cell switch measurement reporting, by using the second parameter set.

According to an embodiment, the method further comprises determining a first delay value for delaying the transmission of a measurement report in response to determining that measurements on the one or more beams fulfil the first condition and do not fulfil the second condition, and/or determining a second delay value for delaying the transmission of a measurement report in response to determining that measurements on the one or more beams fulfil the second condition.

In a first optional implementation of said embodiment, the method further comprises obtaining the first delay value and the second delay value from a same parameter of the event triggered measurement reporting configuration.

In a second optional implementation of said embodiment, the first delay value is one of a delay time or a number of measurement repetitions.

In a third optional implementation of said embodiment, the second delay value is one of a delay time or a number of measurement repetitions.

According to an embodiment, the method further comprises preparing one or more measurement reports including results of the measurement for those beams among the one or more beams, for which the early synchronization measurement reporting and/or the cell-switch measurement reporting is triggered and transmitting the one or more measurement reports to the base station.

In an optional implementation of said embodiment, the one or more measurement reports are transmitted to the base station using lower-layer messages.

According to an embodiment, the method further comprises, after deactivating the cell switch measurement reporting for a beam, determining to activate the early synchronization measurement reporting for the beam, when the measurement results of the beam fulfil the first condition.

In an optional implementation of said embodiment, the method further comprises, after deactivating the cell switch measurement reporting for a beam, determining to continue the early synchronization measurement reporting for the beam, when the measurement results of the beam do not fulfil the first leaving condition.

According to an embodiment, the one or more beams include at least one serving beam, which is used for signal transmission and/or signal reception in a serving cell, which is serving the UE, and at least one candidate beam, which is used for signal transmission and/or a signal reception after the cell switch from the serving cell to the target candidate cell, wherein the target candidate cell is one out of one or more candidates for participating in mobility for the UE.

In an optional implementation of said embodiment, the event triggered measurement reporting configuration identifies the one or more beams, and the method further comprises determining the one or more beams from the event triggered measurement reporting configuration, and, in operation, performs the event triggered measurement reporting for the identified one or more beams.

The method of the fourth aspect or any embodiment/implementation thereof may be implemented in the UE according to the first aspect or any embodiment/implementation thereof.

According to a fifth aspect, it is provided an integrated circuit (that may be deployed in a communication system, in particular a user equipment, UE). The integrated circuit, in operation, may perform the steps of the method of the fourth aspect or any embodiment/implementation thereof.

According to a sixth aspect, it is provided a method for a base station, wherein the method comprises generating, a configuration for event triggered measurement reporting, wherein the event triggered measurement reporting configuration indicates a first condition for triggering early synchronization measurement reporting, which is performed by a UE in preparation of an early synchronization with a target candidate beam, and a second condition, which differs from the first condition, for triggering cell switch measurement reporting, which is performed by the UE in preparation of a cell switch with a target candidate cell, and transmitting the generated event triggered measurement reporting configuration to the UE.

According to an embodiment, the method further comprises, in response to receiving from the UE a measurement report including measurement results, which fulfil the first condition and do not fulfil the second condition, evaluating whether to instruct the UE to execute early synchronization with a beam, for which the measurement results are reported.

According to an embodiment, the method further comprises, in response to receiving from the UE a measurement report including measurement results, which fulfil the second condition, for a beam among the one or more beams,
- evaluating, on the basis of the measurement results, whether to instruct the UE to execute a low layer mobility cell switch, if early synchronization has been performed for the beam, and/or
- instructing the UE to execute early synchronization for the beam, if early synchronization has not been performed for the beam; and/or
- evaluating, on the basis of the measurement results, whether to instruct the UE to perform to execute a Random Access Channel, RACH, based cell switch, if early synchronization has not been performed for the beam.

The method of the sixth aspect or any embodiment/implementation thereof may be implemented in the base station according to the second aspect or any embodiment/implementation thereof.

According to a seventh aspect, it is provided an integrated circuit (that may be deployed in a communication system, in particular a base station). The integrated circuit, in operation, may perform the steps of the method of the sixth aspect or any embodiment/implementation thereof.

## Claims

1. A user equipment, UE, comprising:
a transceiver, which in operation, receives from a base station, a configuration for event triggered measurement reporting;
processing circuitry, which in operation, obtains, from the event triggered measurement reporting configuration, a first condition for triggering early synchronization measurement reporting, which is performed in preparation of an early synchronization with a target candidate beam, and a second condition, which differs from the first condition, for triggering cell switch measurement reporting which is performed in preparation of a cell switch with a target candidate cell, and
the processing circuitry, in operation, performs, for one or more beams, an evaluation as to whether measurements on the one or more beams fulfil at least one of the first condition and of the second condition.

2. The UE according to claim 1, wherein the processing circuitry, in operation, performs measurements on the one or more beams, and evaluates the measurements,
wherein the processing circuitry, in operation, triggers early synchronization measurement reporting for those of the one or more beams, whose measurement results fulfil the first condition and do not fulfil the second condition, and
wherein the processing circuitry, in operation, triggers the cell switch measurement reporting for those of the one or more beams, whose measurement results fulfil the second condition;
optionally wherein the measurements are one or more of radio measurements, distance-based measurements and time-based measurements.

3. The UE according to one of claims 1 or 2, wherein the processing circuitry, in operation, determines, from the event triggered measurement reporting configuration, a second leaving condition for deactivating the cell switch measurement reporting, and
wherein the processing circuitry, in operation, deactivates the cell switch measurement reporting, for those of the one or more beams, for which the cell switch measurement reporting is triggered and whose measurement results fulfil the second leaving condition;
optionally, wherein an hysteresis value is defined for shifting the second leaving condition with respect to the second condition.

4. The UE according to claim 3, wherein the processing circuitry, in operation, determines, from the event triggered measurement reporting configuration, a first leaving condition for deactivating the early synchronization measurement reporting, based on one of the second condition and the second leaving condition; and
deactivates the early synchronization measurement reporting, for those of the one or more beams, for which the cell-switch measurement reporting is triggered and whose measurement results fulfil the first leaving condition, and
optionally, wherein a threshold defined in the first leaving condition corresponds to a threshold defined in the second leaving condition.

5. The UE according to one of claims 1 to 4, wherein the processing circuitry, in operation, determines one of the following conditions as the first condition:
- (i) to trigger the early synchronization measurement reporting, for those of the one or more beams, for which the processing circuitry, in operation, detects a corresponding reference signal;
- (ii) to trigger the early synchronization measurement reporting, for those of the one or more beams, for which the processing circuitry, in operation, detects a corresponding reference signal and for which a measurement evaluated value is larger than an early synchronization threshold;
- (iii) to trigger the early synchronization measurement reporting, when a measurement evaluated value of a serving beam, which is used for signal transmission and/or signal reception in a serving cell is less than an early synchronization threshold;
- (iv) to trigger the early synchronization measurement reporting, when a measurement evaluated value of a candidate beam, which is used for signal transmission and/or a signal reception after the cell switch from the serving cell to the target candidate cell, is larger than an early synchronization threshold;
- (v) to trigger the early synchronization measurement reporting, when a measurement evaluated value of the serving beam is less than a measurement evaluated value of the candidate beam and an early synchronization offset;
- (vi) to trigger the early synchronization measurement reporting, when a measurement evaluated value of the serving beam is less than a first early synchronization threshold, and when the measurement evaluated value of the candidate beam is larger than a second early synchronization threshold.

6. The UE according to claim 4, wherein the processing circuitry, in operation, determines the first condition and the first leaving condition by using the second leaving condition.

7. The UE according to one of claims 1 to 3, wherein the event triggered measurement reporting configuration indicates an early synchronization offset, and wherein the processing circuitry, in operation, determines the first condition by using the early synchronization offset,
optionally, wherein the processing circuitry, in operation, determines the first condition by using the early synchronization offset and the second condition, and
optionally, wherein the processing circuitry, in operation, determines the first condition by using the early synchronization offset and the second leaving condition.

8. The UE according to one of claims 1 to 3, wherein the event triggered measurement reporting configuration indicates a first parameter set for determining the first condition, and a second parameter set for determining the second condition, and
wherein the processing circuitry, in operation, determines the first condition by using the first parameter set and determines the second condition by using the second parameter set;
optionally, wherein the processing circuitry, in operation, determines a first leaving condition, which is useable for deactivating the early synchronization measurement reporting, by using the first parameter set and/or determines a second leaving condition, which is useable for deactivating the cell switch measurement reporting, by using the second parameter set.

9. The UE according to one of claims 1 to 8, wherein the processing circuitry, in operation, determines a first delay value for delaying the transmission of a measurement report in response to determining that measurements on the one or more beams fulfil the first condition and do not fulfil the second condition; and
wherein the processing circuitry, in operation, determines a second delay value for delaying the transmission of a measurement report in response to determining that measurements on the one or more beams fulfil the second condition;
optionally, wherein the processing circuitry, in operation, obtains the first delay value and the second delay value from a same parameter of the event triggered measurement reporting configuration;
optionally, wherein the first delay value is one of a delay time or a number of measurement repetitions;
optionally, wherein the second delay value is one of a delay time or a number of measurement repetitions.

10. The UE according to one of claims 1 to 9, wherein the processing circuitry, in operation, prepares one or more measurement reports including results of the measurement for those beams among the one or more beams, for which the early synchronization measurement reporting and/or the cell-switch measurement reporting is triggered;
wherein the transceiver, in operation, transmits the one or more measurement reports to the base station,
optionally wherein the transceiver transmits the one or more measurement reports to the base station using lower-layer messages,

11. The UE according to one of the preceding claims, wherein the processing circuitry, in operation, after deactivating the cell switch measurement reporting for a beam, determines to activate the early synchronization measurement reporting for the beam, when the measurement results of the beam fulfil the first condition;
optionally, wherein the processing circuitry, in operation, after deactivating the cell switch measurement reporting for a beam, determines to continue the early synchronization measurement reporting for the beam, when the measurement results of the beam do not fulfil the first leaving condition.

12. The UE according to one of the preceding claims, wherein the one or more beams include at least one serving beam, which is used for signal transmission and/or signal reception in a serving cell, which is serving the UE, and at least one candidate beam, which is used for signal transmission and/or a signal reception after the cell switch from the serving cell to the target candidate cell, wherein the target candidate cell is one out of one or more candidates for participating in mobility for the UE;
optionally, wherein the event triggered measurement reporting configuration identifies the one or more beams, and wherein the processing circuitry, in operation, determines the one or more beams from the event triggered measurement reporting configuration, and, in operation, performs the event triggered measurement reporting for the identified one or more beams.

13. A base station comprising:
processing circuitry, which in operation, generates, a configuration for event triggered measurement reporting, wherein the event triggered measurement reporting configuration indicates a first condition for triggering early synchronization measurement reporting, which is performed by a UE in preparation of an early synchronization with a target candidate beam, and a second condition, which differs from the first condition, for triggering cell switch measurement reporting, which is performed by the UE in preparation of a cell switch with a target candidate cell; and
a transceiver, which in operation, transmits the generated event triggered measurement reporting configuration to the UE.

14. The base station according to claim 13, wherein the processing circuitry, in response to receiving from the UE a measurement report including measurement results, which fulfil the first condition and do not fulfil the second condition, evaluates whether to instruct the UE to execute early synchronization with a beam, for which the measurement results are reported.

15. The base station according to one of claims 13 or 14, wherein the processing circuitry, in response to receiving from the UE a measurement report including measurement results, which fulfil the second condition, for a beam among the one or more beams,
• evaluates, on the basis of the measurement results, whether to instruct the UE to execute a low layer mobility cell switch, if early synchronization has been performed for the beam, and/or
• instructs the UE to execute early synchronization for the beam, if early synchronization has not been performed for the beam; and/or
• evaluates, on the basis of the measurement results, whether to instruct the UE to perform to execute a Random Access Channel, RACH, based cell switch, if early synchronization has not been performed for the beam.
